# EUROPEAN PATENT APPLICATION

(11) **EP 2 549 459 A1**
(43) Date of publication of application: **23.01.2013**
(21) Application number: 11174741.6
(22) Date of filing: 20.07.2011
(51) Int. Cl.: G09B 9/04, G09B 9/12, A63F 9/14

(54) **Improved device for simulating acceleration**

(71) Applicant: DELTAreference bvba, 9000 Gent (BE); BIGBEN INTERACTIVE (HK) Ltd., Hong Kong (HK)
(72) Inventor: De Schutter, Rob, 9000 Gent (BE); Jacquet, Patrick, 9000 Gent (BE)
(74) Representative: Vigand, Philippe

(57) **Abstract**

The current invention concerns an acceleration simulating device for controllably rotating a load, comprising a base frame for supporting a first and second subframe, said first subframe which is mounted onto the base frame with a first guiding system capable of guiding the first subframe on a first curved trajectory around a first, lying axis which is located above the second subframe, said first trajectory being limited to an arc of a circle subtending an angle which is smaller than 90°, said second subframe which is mounted onto the first subframe with a second guiding system capable of guiding the second subframe on a second curved trajectory around a second axis which lies essentially perpendicular to the first axis and which essentially cuts the first axis in a rotation center point, said second trajectory being limited to an arc of a circle subtending an angle which is smaller than 90°, and a seat which is mounted onto the second subframe below the rotation center point and at a distance between 15cm and 50cm from the rotation center point.

## Description

### TECHNICAL FIELD

The invention pertains to the technical field of devices which can simulate accelerations. In particular, the invention provides a device which is capable of simulating longitudinal and transversal accelerations.

### BACKGROUND

Devices for simulating accelerations are being used in many applications. They are used for the training of drivers, pilots, astronauts, etc. Furthermore, they are used in combination with car racing games or flight simulator games to increase the feeling of a real driving or flying experience. Acceleration simulating devices typically use systems for rotating a load, such as a person in a seat. By controlling the rotation angles with respect to the vertical direction, a gravitational force can be induced onto the load which simulates the accelerations and fictive forces to which a load would be exposed during its transport.

For a racing game simulator chair, acceleration can be simulated by rotating the chair backwards, while deceleration can be simulated by rotating the chair forwards. This front-to-back rotational movement is called pitch. Therefore, by controlling the pitch of a load, one can simulate longitudinal acceleration and deceleration. Furthermore, turning left or right can be simulated by rotating the chair clockwise and counterclockwise, thereby simulating the centrifugal force in a turn. This clockwise-counterclockwise rotational movement is called roll. Therefore, by controlling the roll of a load, one can simulate the effect of a centrifugal force.

For a flight simulator chair, the pitch of the load can be controlled to simulate the effect of ascent or descent while the roll of the load can be controlled to simulate the turning of the load around a longitudinal axis clockwise or counterclockwise.

Document JP2003079959 discloses a simulation chair which can be controllably rotated by a set of levers underneath the seat. However, the moments of force which the levers need to transmit to the seat can be large, especially when the seat needs to be rotated to a straight position, e.g. for a 100kg load whose center of mass is tilted 10cm to the left of the roll axis, a typical moment of force to turn the load straight is of the order of 100Nm or larger. Furthermore, the levers remain in a fixed position under the seat whereby their moment arm may remain small in order not to have a very large chair, thus necessitating a large force to rotate the seat to a straight position. The lever-controlling systems thus need to be powerful, which leads to a bulky, heavy and expensive simulation device. Similar problems arise in document US4478407, where hydraulic cylinders are necessary to control pitch and roll movements of a cabin mounted on top of the hydraulic cylinders.

The present invention aims to improve the abovementioned prior art devices by providing a smaller, lighter and cheaper device. For this, the present invention provides an acceleration simulating device which can rotate a load around a first, lying axis which essentially lies higher than the device itself and around a second axis which is essentially perpendicular to the first axis and which essentially crosses this first axis in a rotation center point such that the load can be mounted on the device with its center-of-mass point near the rotation center point. In order to do this, the device comprises a seat which is located below the rotation center point and which is preferably located at a distance about 28cm from the rotation center point. In this way, only small moments of force are needed to rotate the load. In order to make this possible, the present device comprises three frames stacked onto each other, a seat and two guiding mechanisms. The first of these guiding mechanisms is capable of guiding the movement of the first subframe with respect to the base frame along a first curved trajectory, while the second guiding mechanism is capable of guiding the movement of the second subframe with respect to the first subframe along a second curved trajectory. The two trajectories are perpendicular to each other, they are planar and they are essentially circular around the abovementioned two axes of rotation and the rotation center point lies above the three frames. Furthermore, the rotation controlling systems are situated near the three frames, i.e. at a certain distance below the rotation center point which is preferably between 0cm and 110cm, more preferably between 25cm and 100cm, even more preferably between 35cm and 60cm, and the controlling systems are capable of applying a force in the directions of the trajectories, thereby applying a moment of force around the first or second axis with a large moment arm. The controlling systems thus need to apply only a small force. This means that the controlling systems may be small, light and cheap and/or may require only a small amount of energy.

Document EP0861483 discloses a device for simulating longitudinal and transverse accelerations on a vehicle compartment whereby the axes of rotation are also located essentially above the device. However, the two perpendicular trajectories are not essentially circular, and therefore there is not a single rotation center point. Rather, the center of rotation depends on the angles over which the load is rotated. Therefore, the distance between the center-of-mass point of the load and the rotation center depends on the angles over which the load is rotated. Accordingly, the amount of force the controlling systems have to apply on the bodies to induce a movement depends on the abovementioned angles and may become large.

Document DE102008032231 discloses an acceleration simulating device similar to the device of present invention. However, the two axes of rotation are both fixed in space which means that pitch and roll movements are coupled. Furthermore, the suspension points, i.e. the points where the load is mounted onto the device, and the suspension system with the spherical caps rise to or above the rotation center point. Therefore, the disclosed device is high and large. This is in contrast with the present invention where pitch and roll movements are decoupled and where the suspension points, i.e. the points where the load can be attached to the device, are below the rotation center point, thus leading to a device which is controlled in a more intuitive way and which is more compact.

There remains a need in the art for an improved acceleration simulating device which is compact, light, cheap and/or in which roll and pitch movements are decoupled. The invention thereto aims to provide an acceleration simulating device for controllably rotating a load around a first, lying axis located above the device and around a second axis essentially perpendicular to the first axis which crosses the first axis near a rotation center point lying above the device, whereby the load can be attached to the device with its center-of-mass point near the rotation center point. In addition to the roll and pitch axes, the invention also provides a device which can rotate a load around a third, upstanding axis. The rotation around this third axis can be called yaw.

It may not always be the case that the center-of-mass of the load is automatically located near the rotation center point of the device. Therefore, the present invention also aims to provide an acceleration simulating device comprising a seat which is adjustably attached to the second subframe of the device, such that the center-of-mass of the load can easily be made to be near the rotation center point. Hereby, the seat may be adjustable in height, i.e. the seat may be adjustable along the yaw axis of the device. The seat may also be adjustable in the longitudinal direction, i.e. along the roll axis. In most cases, the load is mirror-symmetrical with respect to the vertical plane going through the roll axis. Therefore, it is not always needed that the seat is adjustable along the direction of the pitch axis. Nevertheless, for certain applications, the seat may still be adjustable along the pitch axis.

### SUMMARY OF THE INVENTION

The present invention provides an acceleration simulating device for controllably rotating a load, comprising:
● a base frame for supporting a first and second subframe;
● said first subframe which is mounted onto the base frame with a first guiding system capable of guiding the first subframe on a first curved trajectory around a first, lying axis which is located above the second subframe, said first trajectory being limited to an arc of a circle subtending an angle which is smaller than 90°;
● said second subframe which is mounted onto the first subframe with a second guiding system capable of guiding the second subframe on a second curved trajectory around a second axis which lies essentially perpendicular to the first axis and which essentially cuts the first axis in a rotation center point, said second trajectory being limited to an arc of a circle subtending an angle which is smaller than 90°;
● a seat which is mounted onto the second subframe below the rotation center point and at a distance between 15cm and 50cm from the rotation center point.

The present invention further provides a system comprising a base frame, a first subframe and a second subframe suitable to be used in an acceleration simulating device for controllably rotating a load such as described in this document.

Also, the present invention provides a system comprising an acceleration simulating device for controllably rotating a load such as described in this document, and a console connected to the control unit of said device

### DESCRIPTION OF FIGURES

**Figures 1a, 1a', 2a, 2a', 2b and 2b'** show the main axes of rotation of a load, in this case a person in a seated position, from different perspectives.
**Figures 3 to 7** show an embodiment of the present invention from different perspectives.
**Figures 8 to 21** show embodiments of the present invention where each of the two guiding systems comprise a pair of bars and two pairs of wheels, whereby the bars have a circular transverse cross section and the wheels have a inwards bulging peripheral profile.
**Figures 22****,** **23** **and** **24** show an embodiment of the present invention which comprises a pedal system for controlling the pitch movement.
**Figures 25a and 25b** show an embodiment of the present invention which comprises a steering wheel system for controlling the roll movement.
**Figure 26** displays the connection of a console to the peripherals of an acceleration simulating device according to an embodiment of the present invention.
**Figures 27** **and** **28** show an embodiment of the present invention where the control systems comprise electromotors.
**Figures 29** **and** **30** show embodiments of the present invention in which the guiding systems each comprise a pair of cylinders rotatably mounted on the supporting frame and a curved surface attached to the supported frame.

### DETAILED DESCRIPTION OF THE INVENTION

The present invention concerns a device which is capable of simulating longitudinal and transversal accelerations.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

The term "console" as used herein refers to a multitude of devices which can be unidirectionally or bidirectionally coupled to the acceleration simulating device, either directly or via a control unit. In particular, the term may refer to game consoles or computers such as Playstation, Xbox, Wii, iPad, iPhone, PSP, Nintendo DS, PC, laptop, netbook, etc. The term may also refer to other, usually electronic, devices such as a TV, display screen, DVD-player, Blue-ray player, CD-player, 2D or 3D video display glasses, head-mounted displays, or any other kind of multimedia device.

When distances are used in reference to the seat of the device of the present invention, this is to be interpreted as distances from the seating surface of the seat. Obviously, a seat may comprise a back support, arm supports, etc., but will by definition comprise a seating surface.

In a first aspect, the invention provides an acceleration simulating device which is more compact, lighter and cheaper to produce than prior art devices. The device is capable of rotating a load such that, due to gravitation, the load undergoes longitudinal and transverse forces. Furthermore, the axes around which a load when attached to the device, is able to rotate, are located above the device. A typical load is a person sitting on the device. The seat, where the load can be placed onto the device, is located below the axes around which the load is rotated. To achieve this, the device comprises:
● a base frame for supporting a first and second subframe;
● said first subframe which is mounted onto the base frame with a first guiding system capable of guiding the first subframe on a first curved trajectory essentially around a first, lying axis which is located above the second subframe, said first trajectory being limited to an arc of a circle subtending an angle which is smaller than 90°;
● said second subframe which is mounted onto the first subframe with a second guiding system capable of guiding the second subframe on a second curved trajectory essentially around a second axis which lies essentially perpendicular to the first axis and which essentially cuts the first axis in a rotation center point, said second trajectory being limited to an arc of a circle subtending an angle which is smaller than 90°;
● a seat which is mounted onto the second subframe below the rotation center point and at a distance between 15cm and 50cm from the rotation center point.

The first and second trajectories thus essentially follow the path of a circle arc with a first and a second radius respectively. With "essentially around a first/second axis", it is meant that the radius of curvature along the first and second trajectories deviates less than 25% from this first and second radius, more preferably less than 20%, even more preferably less than 15%, still more preferably less than 10%, still even more preferably less than 5%, yet more preferably less than 2%, yet even more preferably less than 1% from this first and second radius. Most preferably, the radius of curvature along the first and second trajectories is about said first and second radius respectively.

The first axis is a lying axis. This means that the optimal position of the first axis is horizontal. However, due to manufacturing errors and other factors such as an unleveled floor or a sub-optimal adjustment of the device, this first axis may not lie completely horizontal. Therefore, a lying axis denotes an axis which makes an angle with a horizontal plane which is less than 20°, preferably less than 10°, more preferably less than 5°, even more preferably less than 2°, still more preferably less than 1°, most preferably less than 0.5°.

The second axis is described as lying essentially perpendicular to the first axis. Obviously, due to manufacturing errors and other factors such as assembling errors or inaccuracies, it is difficult to make the second axis exactly perpendicular to the first axis. Therefore, with "essentially perpendicular", it is meant that the angle between the first and the second axis deviates from 90° by less than 20°, preferably less than 10°, more preferably less than 5°, even more preferably less than 2°, still more preferably less than 1°, most preferably less than 0.5°.

The second axis is also described as essentially cutting the first axis in a rotation center point. With "essentially cutting", it is meant that the closest distance between the first and the second axis is small, preferably less than 35cm, more preferably less than 20 cm, even more preferably less than 10 cm, still more preferably less than 5cm, still even more preferably less than 2cm, most preferably less than 1cm. In this context, the rotation center point is the point on the first axis which lies the closest to the second axis.

In some embodiments, it is preferred that the smallest distance between the first and second axis is as small as possible. In other embodiments, it is preferred that the smallest distance between first and second axis is non-vanishing, preferably more than 0.1cm, more preferably more than 0.2cm, even more preferably more than 0.5cm, still more preferably more than 1cm, still even more preferably more than 2cm, most preferably more than 5cm. This is typically the case when the first subframe which is capable of rotating around the first axis but not around the second axis, is heavy: the heavier the first subframe, the larger the preferred distance between first and second axis. Since the first subframe is capable of rotating around the first axis but not around the second axis, the center-of-mass of the system which rotates around the first axis differs from, usually lies lower than, the center-of-mass of the system which rotates around the second axis, and this by a distance which may depend e.g. on the weight of the first subframe.

An example of a typical load which can be rotated by the present device is a person who may be holding a game controller or other gaming accessories.

By placing the seat of the device below the rotation center point and at a distance between 15cm and 50cm, the center-of-mass of a typical load on the seat lies near the rotation center point. The load can thus be rotated by the application of only a small moment of force. In fact, when the center-of-mass of the system consisting of the load, the chair, the first and the second subframe lies on the first axis, and the center-of-mass of the system consisting of the load, the chair and the second subframe lies on the second axis, only a vanishingly small moment of force is needed to rotate the load in any desired position within the device's range. Therefore, placing the seat of the device below the rotation center point and at a distance between 15cm and 50cm, solves the problem of needing strong, powerful, bulky and/or expensive systems for inducing moments of force on the rotatable parts of the device. Preferably the seat is located at a distance larger than 15cm, 18cm, 21cm, 23cm, 24cm, 25cm, 26cm, 27cm, 28cm and smaller than 50cm, 45cm, 40cm, 36cm, 33cm, 32cm, 31cm, 30cm, 29cm from the rotation center point. Most preferably the seat is located at a distance about 28cm from the rotation center point. In a preferred embodiment, the seat is attached to the second subframe in a way which allows the distance between seat and rotation center point to be altered. In an embodiment, the seat is the seat of an office chair attached to the second subframe by a set of telescopic tubes as well known in the art such that the height of the seat is easily adaptable. In a preferred embodiment, the seat of the office chair is easily removable from the device and may be fit to be placed on one or more chair legs. In this latter embodiment, the device has the advantage of being more easily stored, since the seat can be reused as e.g. office seat and the rest of the device can be kept low and e.g. be stored under a bed. This can also be achieved in an embodiment where the seat of the device is attached to the second subframe in a way which allows the seat to be bent over for easier storage. In another embodiment, the seat is the seat of a racing seat, a race car seat or a cockpit seat. In an embodiment, the seat comprises a seat belt system or safety harness, such as a lap belt, a sash belt, a three-point, four-point, five-point, six-point or seven-point safety belt or harness, etc. Such a seat belt system increases the safety of the user and may increase the reality of the simulated accelerations.

The abovementioned device is capable of rotating a load around a pitch axis and around a roll axis which are decoupled. This allows for an easier and more intuitive control of the rotation. In an embodiment, the first axis is a pitch axis which remains fixed with respect to the base frame and the second axis is a roll axis which remains fixed with respect to the second subframe. In another embodiment, the first axis is a roll axis which remains fixed with respect to the base frame and the second axis is a pitch axis which remains fixed with respect to the second subframe. It should be noted that the terms 'pitch' and 'roll' refer in general to front-to-back and clockwise-counterclockwise rotational movements respectively. In a preferred embodiment, the first trajectory subtends a larger angle than the second trajectory. This allows for an increased stability of the device, e.g. when roll movements are expected to be larger than pitch movements, i.e. the roll movements comprise larger rotation angles around the roll axis than the pitch movements around the pitch axis, it may be best to take the first axis as the roll axis and the second axis as the pitch axis. Vice versa, when pitch movements are expected to be larger than roll movements, i.e. the pitch movements comprise larger rotation angles around the pitch axis than the roll movements around the roll axis, it may be best to take the first axis as the pitch axis and the second axis as the roll axis.

In an embodiment, the first trajectory is limited to an arc of a circle subtending an angle which is smaller than 90°, more preferably smaller than 70°, even more preferably smaller than 50°, still more preferably smaller than 40°, even still more preferably smaller than 30°, yet more preferably smaller than 27°, most preferably about 24°. In an embodiment, the first trajectory is limited to an arc of a circle subtending an angle of at least 0.1°, more preferably at least 5°, even more preferably at least 10°, still more preferably at least 15°, still even more preferably at least 20°, yet more preferably at least 22°. Because the subtending angle is smaller than 90°, the device can be kept small and compact. The smaller the subtending angle is, the more compact the device will be. Because the subtending angle is at least 0.1°, the device can rotate a load around the first axis over at least 0.1° and thus simulate an acceleration of the load. The larger the subtending angle is, the larger the acceleration which can be simulated, will be. In general, a trade-off can be made between the compactness of the device and the magnitude of the accelerations which the device is capable of simulating by turning the load around the first axis.

In an embodiment, the second trajectory is limited to an arc of a circle subtending an angle which is smaller than 90°, more preferably smaller than 70°, even more preferably smaller than 50°, still more preferably smaller than 40°, even still more preferably smaller than 30°, yet more preferably smaller than 27°, most preferably about 24°. In an embodiment, the second trajectory is limited to an arc of a circle subtending an angle of at least 0°, more preferably at least 5°, even more preferably at least 10°, still more preferably at least 15°, still even more preferably at least 20°, yet more preferably at least 22°. Because the subtending angle is smaller than 90°, the device can be kept small and compact. The smaller the subtending angle is, the more compact the device will be. Because the subtending angle is at least 0.1°, the device can rotate a load around the second axis over at least 0.1° and thus simulate an acceleration of the load. The larger the subtending angle is, the larger the acceleration which can be simulated, will be. In general, a trade-off can be made between the compactness of the device and the magnitude of the accelerations which the device is capable of simulating by turning the load around the second axis.

In an embodiment, the rotation center point is located at a distance above the lowest point of the base frame which is more than 0cm, preferably more than 5cm, more preferably more than 10cm, even more preferably more than 15cm, still more preferably more than 20cm, still even more preferably more than 23cm, yet more preferably more than 26cm, yet even more preferably more than 28cm, yet still more preferably more than 31cm, yet still even more preferably more than 35cm. In an embodiment, the rotation center point is located at a distance above the lowest point of the base frame which is more than 40cm, 50cm, 60cm, 70cm, 80cm, 90cm, 100cm.

In an embodiment, the rotation center point is located at a distance above the lowest point of the base frame which is less than 150cm, preferably less than 140cm, more preferably less than 130cm, even more preferably less than 120cm, still more preferably less than 110cm, still even more preferably less than 100cm, yet more preferably less than 90cm, yet even more preferably less than 80cm, yet still more preferably less than 70cm, yet still even more preferably less than 60cm.

The device of the present invention is capable of receiving a load which can be attached onto the seat such that the load's center-of-mass is near the rotation center point. This means that the center-of-mass of the load is located above the seat. Furthermore, the suspension points where the seat is attached to the frames, are low, namely at the level of the second subframe. This means that the whole device can be kept low and small compared to prior art devices where the suspension points could be located at the same height as the center-of-mass of the load, whereby the device necessarily surrounded the load. Also, if the load can be attached with its center-of-mass near the rotation center point of the device, the load can be rotated by applying only a small force or moment of force, which can even be vanishingly small when the center-of-mass lies exactly at the rotation center point.

In a preferred embodiment of the device, the first guiding system comprises:
● one or more, preferably two, curved bars or rails which are rigidly mounted on the base frame, said bars or rails following the path of the first trajectory;
● two or more wheels rotatably attached to the first subframe such that the wheels can roll over said bars or rails, thereby guiding the first subframe along the first trajectory.

In this embodiment, the first subframe can be seen as a cart on wheels which follows the rails or tracks attached to the base frame. This embodiment is cheap, light and compact. Alternatively, the curved bars or rails may be rigidly mounted on the first subframe and the two or more wheels may be attached to the base frame.

In a preferred embodiment of the device, the second guiding system comprises:
● one or more, preferably two, curved bars or rails which are rigidly mounted on the first subframe, said bars or rails following the path of the second trajectory;
● two or more wheels rotatably attached to the second subframe such that the wheels can roll over said bars or rails, thereby guiding the second subframe along the second trajectory.

In this embodiment, the second subframe can be seen as a cart on wheels which follows the rails or tracks attached to the first subframe. This embodiment is cheap, light and compact. Alternatively, the curved bars or rails may be rigidly mounted on the second subframe and the two or more wheels may be attached to the first subframe.

In a more preferred embodiment of the device, the bars or rails of at least one of the guiding systems have a lateral cross section which bulges outwards and the wheels have a peripheral profile which bulges inwards. As such, the wheels and therefore the subframe to which they are attached are kept on track, while limiting possible slipping and friction. In an even more preferred embodiment, the bars or rails of the second guiding system have a lateral cross section which bulges outwards, preferably essentially circular, and the wheels have a peripheral profile which bulges inwards, preferably essentially circular with a radius which may be larger the radius of the lateral cross section of the bars or rails by less than 10%, more preferably less than 5%, even more preferably less than 2%, still more preferably less than 1%, still even more preferably less than 0.5%. The advantage of the bars or rails and wheels of second guiding system having such a lateral cross section and peripheral profile, is that they remain on track, even when the first subframe is rotated around the first axis towards extremal positions of the first trajectory.

In an embodiment, the first guiding system comprises:
● at least two cylinders rotatably attached to the base frame;
● at least one curved surface rigidly attached to the first subframe, said surface following the path of the first trajectory;
whereby said curved surface can roll over said cylinders, thereby guiding the first subframe along the first trajectory. This embodiment is cheap, light and compact.

In an embodiment, the second guiding system comprises:
● at least two cylinders rotatably attached to the first subframe;
● at least one curved surface rigidly attached to the second subframe, said surface following the path of the second trajectory;
whereby said curved surface can roll over said cylinders, thereby guiding the second subframe along the second trajectory. This embodiment is cheap, light and compact.

Since the subframes can move along curved trajectories, the center-of-mass of the load may hang over the borders of the suspension base of the subframes. It may thus be necessary to incorporate counter-measures in the present invention in order to prevent a subframe from tipping over. This problem is particularly pressing when the span width of a subframe is too small. The span width can be defined as the longest distance between suspension points of a subframe in the direction of its movement. If the span width becomes too small, the subframe may tip over when it is turned over a certain angle. If the span width is too large, the maximum angle over which the load can be rotated is reduced, or the device becomes too big.

The problem of tipping over can be solved by choosing an optimal span width. In an embodiment, the ratio between the span width of a subframe and the diameter of the circular trajectory along which the subframe moves, is larger than 0.1, more preferably larger than 0.2, even more preferably larger than 0.3, still more preferably larger than 0.4, still even more preferably larger than 0.5, yet more preferably larger than 0.6, yet even more preferably larger than 0.7. The larger this ratio is, the more stable the device will be, since the subframe will have a larger span width and thus a larger suspension base. In an embodiment, the ratio between the span width of a subframe and the diameter of the circular trajectory along which the subframe moves, is smaller than 0.8, more preferably smaller than 0.7, even more preferably smaller than 0.6, still more preferably smaller than 0.5, still even more preferably smaller than 0.4, yet more preferably smaller than 0.3, yet even more preferably smaller than 0.2. The smaller this ration is, the more compact the device will be. In a preferred embodiment, the ratio between the span width of a subframe and the diameter of the circular trajectory along which the subframe moves, lies between 0.3 and 0.4.

Another problem which may arise is that the device may become disassembled, e.g. when it is picked up to be repositioned. In particular, it may be advisable to add one or more restraining elements to the device which ensures that a subframe remains attached to its supporting frame or subframe, even when it is being lifted. Therefore, in an embodiment, the present invention concerns an acceleration simulating device whereby the first guiding system comprises one or more restraining elements attached to the base frame or attached to the first subframe for preventing the first subframe from tipping over. In a preferred embodiment, these restraining elements are counter-rails or counter-bars rigidly attached to the base frame. The restraining elements, such as counter-rails or counter-bars may also ensure that the first subframe remains attached to the base frame when it is being lifted. In an embodiment, the present invention concerns an acceleration simulating device whereby the second guiding system comprises one or more restraining elements attached to the first subframe or attached to the second subframe for preventing the second subframe from tipping over. In a preferred embodiment, these restraining elements are counter-rails or counter-bars rigidly attached to the first subframe. The restraining elements, such as counter-rails or counter-bars may also ensure that the second subframe remains attached to the first subframe when it is being lifted. In a preferred embodiment, the present invention concerns an acceleration simulating device whereby at least one wheel of the first guiding system is above a rail of the first guiding system and whereby at least one wheel of the first guiding system is below a rail of the first guiding system, thereby preventing the first subframe from tipping over or from detaching from the base frame when being lifted. In this embodiment, at least one wheel below a rail of the first guiding system acts as a restraining element. In a preferred embodiment, the present invention concerns an acceleration simulating device whereby at least one wheel of the second guiding system is above a rail of the second guiding system and whereby at least one wheel of the second guiding system is below a rail of the second guiding system, thereby preventing the second subframe from tipping over or from detaching from the first subframe when being lifted. In this embodiment, at least one wheel below a rail of the second guiding system acts as a restraining element.

One of the uses of the device of the present invention, is as a simulation chair for car racing or flight simulator games. In this respect, but also in others, the load comprises the person playing these games. If the load comprises a person, the seat should be made comfortable. Therefore, in an embodiment, the device of the present invention comprises a footrest attached to the seat for allowing a person sitting in the seat to rest his feet, whereby the distance between footrest and seat is adaptable in order to improve user comfort. The device may also comprise a displaying device attached to the seat and which can be electrically or wirelessly connected to e.g. a console.

The device works best if the load can be placed with its center-of-mass as near as possible to the rotation center point. In order to ensure that this is possible, the seat may be attached to the second subframe such that its position can be changed according to the weight, the size and the needs of the load. Therefore, in an embodiment, the seat of the device is attached to the second subframe with a seat mounting system for allowing the seat to be moved in the longitudinal direction, said seat mounting system comprising:
● a first seat frame rigidly attached to the second subframe and comprising one or more rails in the longitudinal direction;
● a second seat frame rigidly attached to the seat comprising one or more rails which fit in or around the rails of the first seat frame and which can slide over the rails of the first seat frame;
● a rail locking device such as a clamp or a pin, for locking the second seat frame in a fixed position with respect to the first seat frame.
   With this mounting system, it is possible to easily change the position of the load's center-of-mass in the longitudinal direction.

The position of the subframes with respect to the base frame and to each other may be controlled separately and intuitively in the device of the present invention. Therefore, in an embodiment, the present invention concerns an acceleration simulating device for controllably rotating a load, comprising a first control system for controlling the position of the first subframe with respect to the base frame, and a second control system for controlling the position of the second subframe with respect to the first subframe.

Since the present device has been devised to allow the rotation of a load needing only very small forces and moments of force, control systems may comprise only cheap, light and compact constituents which need little power and energy. In a preferred embodiment, the first control system comprises one or more electromotors which are attached to the first subframe, said first control system further comprising first transmission means for transmitting the rotational movement of the electromotors' axes to the movement of the first subframe along the first trajectory, said first transmission means preferably comprising a set of teeth rigidly mounted on the base frame along the first trajectory, preferably on the first guiding system and one or more gears attached to the axes of the electromotors which grip into said teeth. In another preferred embodiment, the first transmission means comprise a rubber layer attached around the axes of the electromotors in contact with a rubber layer attached to the base frame along the first trajectory, whereby the rotational movement of the electromotors' axes is transmitted to the movement of the first subframe along the first trajectory by friction between the two rubber layers. This embodiment is very cheap and light. In a preferred embodiment, the second control system comprises one or more electromotors which are attached to the second subframe, said second control system further comprising second transmission means for transmitting the rotational movement of the electromotors' axes to the movement of the second subframe along the second trajectory, said second transmission means preferably comprising a set of teeth rigidly mounted on the first subframe along the second trajectory, preferably on the second guiding system and one or more gears attached to the axes of the electromotors which grip into said teeth. In another preferred embodiment, the second transmission means comprise a rubber layer attached around the axes of the electromotors in contact with a rubber layer attached to the first subframe along the second trajectory, whereby the rotational movement of the electromotors' axes is transmitted to the movement of the second subframe along the second trajectory by friction between the two rubber layers. This embodiment is very cheap and light.

In the case a control system comprises an electromotor, it may also be beneficial to be able to steer the power and orientation of rotation of the electromotors by a control unit which can receive input signals e.g. from a console, or from the input devices to a console. Therefore, in a preferred embodiment, the device comprises a control unit connected to the electromotors of the first and second control systems which is capable of controlling the power and rotation orientation of said electromotors. In a more preferred embodiment, the control unit comprises a programmable component. In another more preferred embodiment, the device comprises sensor systems connected to the control unit, for sensing the position of the subframes. This can help to solve the possible problem of recalibrating the electromotors when necessary.

The input for steering the control systems may come from the load, especially when the load comprises a person and the device is used as a simulation chair. Therefore, in a preferred embodiment, the present invention concerns an acceleration simulating device, whereby the first axis is the pitch axis and the second axis is the roll axis, said device further comprising:
● a roll input system such as a steering wheel system attached to the seat and connected to the control unit for controlling the second control system;
● a pitch input device such as a pedal system attached to the seat and comprising at least two pedals connected to the control unit for controlling the first control system, said pedal system comprising pedal returning actuators for forcing the pedals back to a pre-determined rest position.

In this embodiment, the steering wheel controls the movement of the second subframe, which is the roll movement, and the pedals control the movement of the first subframe, which is the pitch movement. The roll movement simulates centrifugal forces or transversal accelerations, such as the ones a load undergoes while turning to the left or right, while the pitch movement simulates longitudinal accelerations, such as the ones a load undergoes during acceleration or deceleration. The pedal system may further comprise pedal returning actuators for forcing the pedals back to a pre-determined rest position. These actuators may be mechanical, such as springs, or may be electromechanical, electrical, magnetic, etc.

In a preferred embodiment, the device comprises sensor systems for sensing the position of the steering wheel and/or the pedals attached to the seat, whereby said sensor systems are capable of being connected to a control unit or to the input of a console. Thereby, the position of the steering wheel and/or pedals can be sent to this control unit or console input and can be used as input for controlling both the game as the movements of the acceleration simulating device of the present invention.

In another embodiment, the first control system of the acceleration simulating device comprises:
● a first Bowden cable comprising a first inner cable and a first outer tube, whereby a distal end of the first inner cable is attached to the base frame at a first extremal position of the first trajectory and whereby a distal end of the first outer tube is attached to the first subframe at the side of the first extremal position of the first trajectory, thereby controlling the movement of the first subframe along the first trajectory in the direction of its first extremal position by pulling a proximal end of the first inner cable out from a proximal end of the first outer tube;
● a second Bowden cable comprising a second inner cable and a second outer tube, whereby a distal end of the second inner cable is attached to the base frame at a second extremal position of the first trajectory and whereby a distal end of the second outer tube is attached to the first subframe at the side of the second extremal position of the first trajectory, thereby controlling the movement of the first subframe along the first trajectory in the direction of its second extremal position by pulling a proximal end of the second inner cable out from a proximal end of the second outer tube;
and the second control system comprises:
● a third Bowden cable comprising a third inner cable and a third outer tube, whereby a distal end of the third inner cable is attached to the first subframe at a first extremal position of the second trajectory and whereby a distal end of the third outer tube is attached to the second subframe at the side of the first extremal position of the second trajectory, thereby controlling the movement of the second subframe along the second trajectory in the direction of its first extremal position by pulling a proximal end of the third inner cable out from a proximal end of the third outer tube;
● a fourth Bowden cable comprising a fourth inner cable and a fourth outer tube, whereby a distal end of the fourth inner cable is attached to the first subframe at a second extremal position of the second trajectory and whereby a distal end of the fourth outer tube is attached to the second subframe at the side of the second extremal position of the second trajectory, thereby controlling the movement of the second subframe along the second trajectory in the direction of its second extremal position by pulling a proximal end of the fourth inner cable out from a proximal end of the fourth outer tube.

In this embodiment, no electrical wiring is necessary. The position of the subframes may be controlled mechanically through the wiring with Bowden cables. Also, the device can be used as a standalone device, i.e. there is no necessity of a control unit or of an interface with external components such as a console: the movements of the subframes can be completely controlled by handling the proximal ends of the Bowden cables. Therefore, in a preferred embodiment, the present invention concerns an acceleration simulating device whereby the first axis is the pitch axis, the first control system is a pitch control system, the second axis is the roll axis, and the second control system is a roll control system, said device comprising a steering wheel attached to the seat and connected to the proximal ends of the Bowden cables of the roll control system, said device comprising a pedal system attached to the seat and which comprises at least two pedals connected to the proximal ends of the Bowden cables of the pitch control system. The steering wheel may comprise a rotatable part mounted on a static part, whereby the proximal ends of the inner cables of the roll-controlling Bowden cables are attached to the rotatable part and whereby the proximal ends of the outer tubes of the roll-controlling Bowden cables are attached to the static part of the steering wheel. In a preferred embodiment, the pedal system comprises pedal returning actuators for forcing the pedals back to a pre-determined rest position.

In a particularly preferred embodiment, the device comprises a pedal system for which the pedals can turn maximally up to an angle which is comfortable for a user of the device, this angle preferably smaller than 50°, more preferably smaller than 48°, even more preferably smaller than 47°, still more preferably smaller than 46°, still even more preferably smaller than 45°, yet more preferably smaller than 44°, yet even more preferably smaller than 43°, yet still more preferably smaller than 42°, yet still even more preferably smaller than 41°, this angle preferably larger than 0.1°, more preferably larger than 5°, even more preferably larger than 10°, still more preferably larger than 15°, still even more preferably larger than 20°, yet more preferably larger than 25°, yet even more preferably larger than 30°, yet still more preferably larger than 35°, yet still even more preferably larger than 39°, most preferably this angle is about 40°.

In a more preferred embodiment, the maximal angle over which a pedal can be turned corresponds to an extremal position of the first or second trajectory of the subframes, preferably the trajectory around the pitch axis. In an even more preferred embodiment, the pedal system comprises a transmission system for controlling the transmission coefficient between the rotation of a pedal and the rotation of the first or second subframe around the pitch axis. In a more preferred embodiment, the maximal angle over which the steering wheel can be turned corresponds to an extremal position of the first or second trajectory of the subframes, preferably the trajectory around the roll axis. In an even more preferred embodiment, the diameters of the static and rotatable parts of the steering wheels are devised such that the maximal angle over which the steering wheel can be turned corresponds to an extremal position of the first or second trajectory of the subframes, preferably the trajectory around the roll axis.

In a particularly preferred embodiment, the device comprises a pedal system for which it is difficult for a person to use both the pedal controlling the movement of a subframe towards one extremal position and the pedal controlling the movement of the same subframe towards the other extremal position at the same time, in order to prevent overloading the control systems. This can be arranged by placing a bar, e.g. onto which a steering wheel is mounted, between the expected position of the user's left foot and the two controlling pedals. In this way, the user is forced to use the two pedals with only his right foot and cannot operate the two pedals at the same time.

In an embodiment the first and second control system can be easily decoupled from the first and second guiding system respectively, meaning that no more force or moment of force can be transmitted from the control system to the guiding system. This may prevent unnecessary and unwanted forces and moments of force to act on the control system when the device is not in use, e.g. when a person stands up from the seat, thereby drastically changing his center-of-mass, or when the device is being picked up. In case a control system comprises an electromotor, the device may e.g. comprise a switch or button for decoupling the electromotor from its axis load. In case a control system comprises Bowden cables, the device may e.g. comprise clamping or pinning devices for keeping the inner Bowden cables fixed into their tubes. In an embodiment, the device may also comprise locking mechanisms for keeping the subframes into a fixed position, such as bolts or drop shutters.

In a second aspect, the invention concerns a system comprising a base frame, a first subframe and a second subframe suitable to be used in an acceleration simulating device as described herein. In an embodiment, the system may also comprise a seat, guiding systems and/or controlling systems as described above.

In a further aspect, the invention concerns a system comprising an acceleration simulating device comprising a control unit as described herein, and a console connected to the control unit of said device.

The invention is further described by the following non-limiting examples which further illustrate the invention with the aid of the figures. These examples are not intended to, nor should they be interpreted to, limit the scope of the invention.

### EXAMPLES

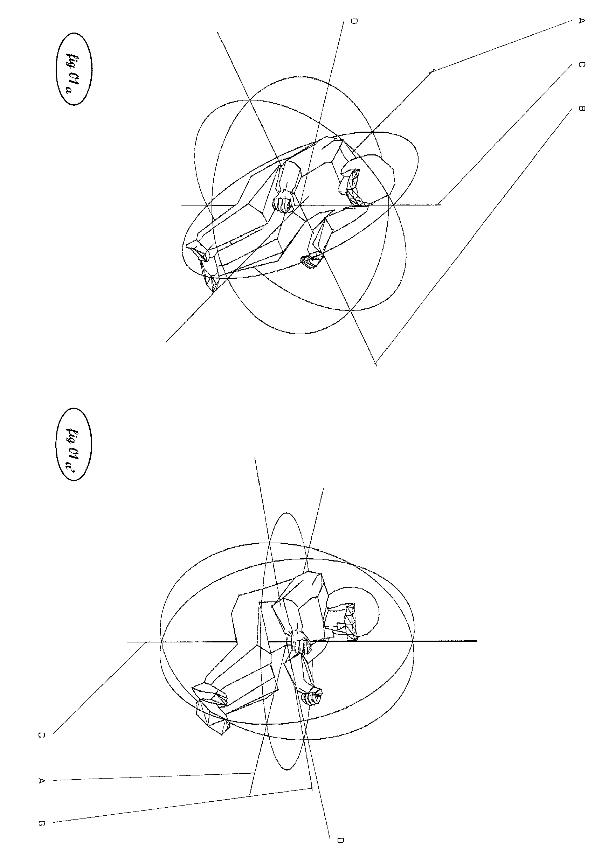

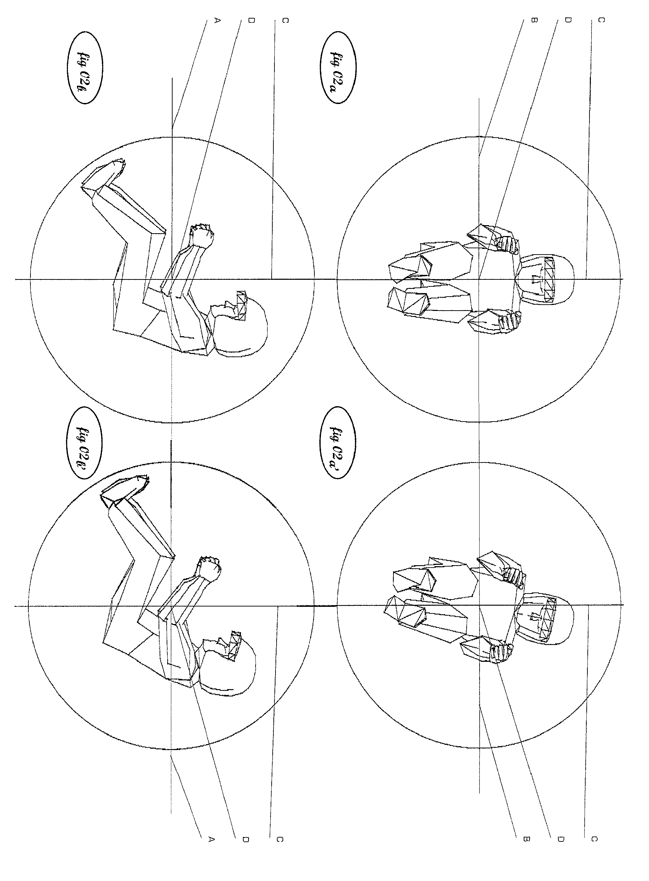

Figures 1a, 1a', 2a, 2a', 2b and 2b' show the main axes of rotation of a load, in this case a person in a seated position, from different perspectives. The person can rotate around a roll axis (A) in a clockwise and counter-clockwise direction as illustrated in figs. 2a and 2a'. The person can also rotate around a pitch axis (B) in a forward or backward somersault (front-to-back) direction as illustrated in figs. 2b and 2b'. The person can also rotate around a yaw axis (C) in a pirouette direction. The person's center-of-mass (D) in a seated position is typically located at the level of his solar plexus.

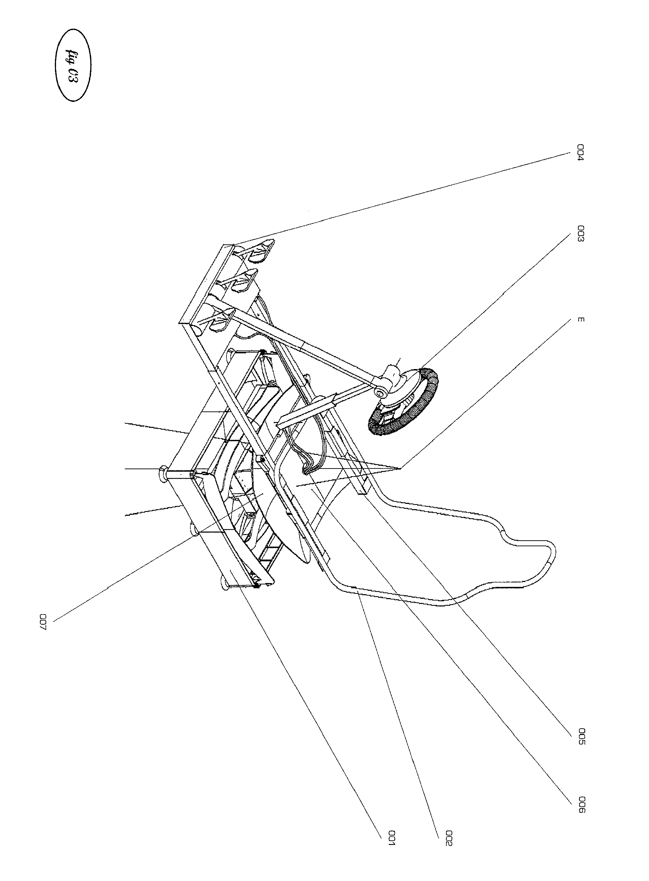

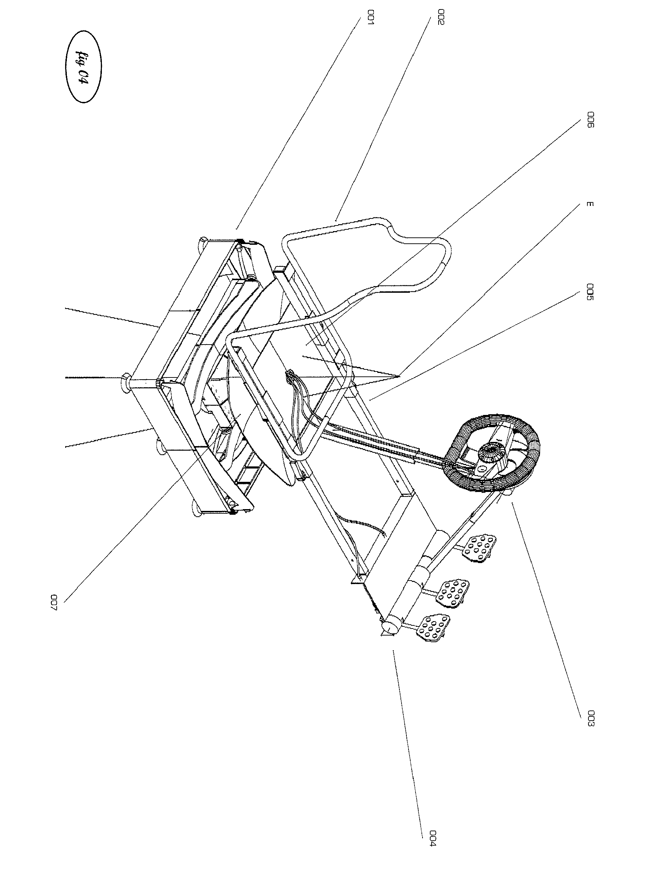

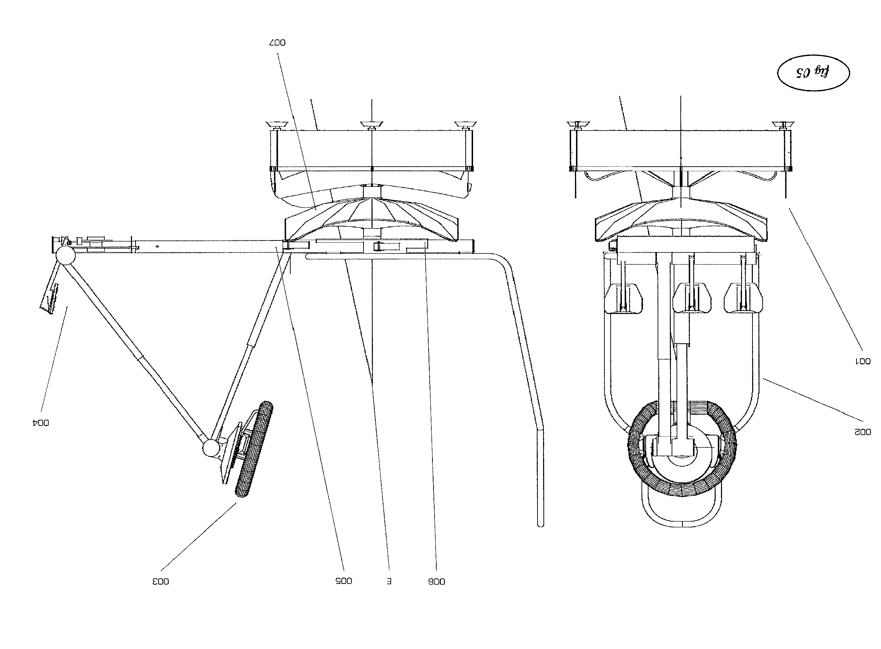

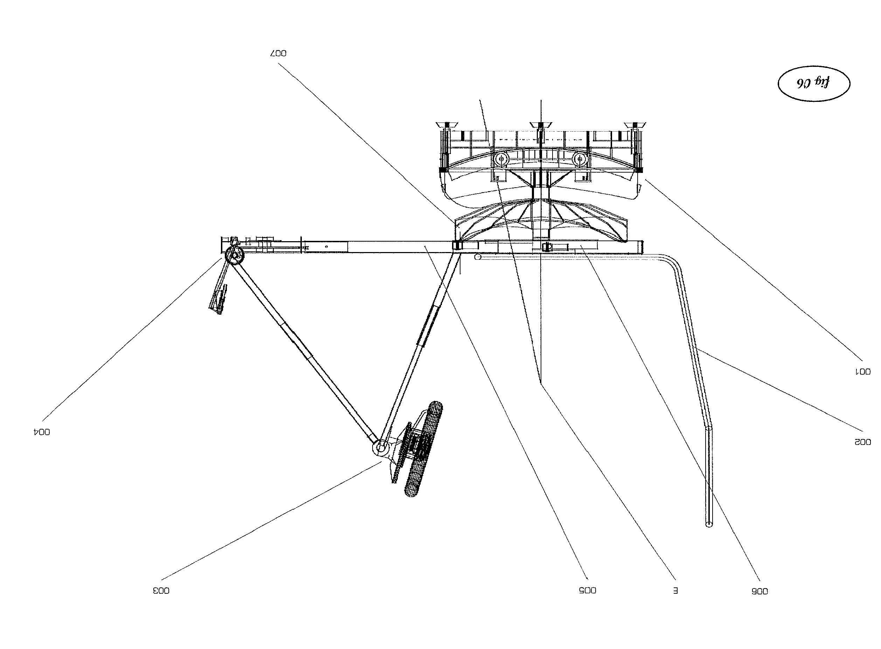

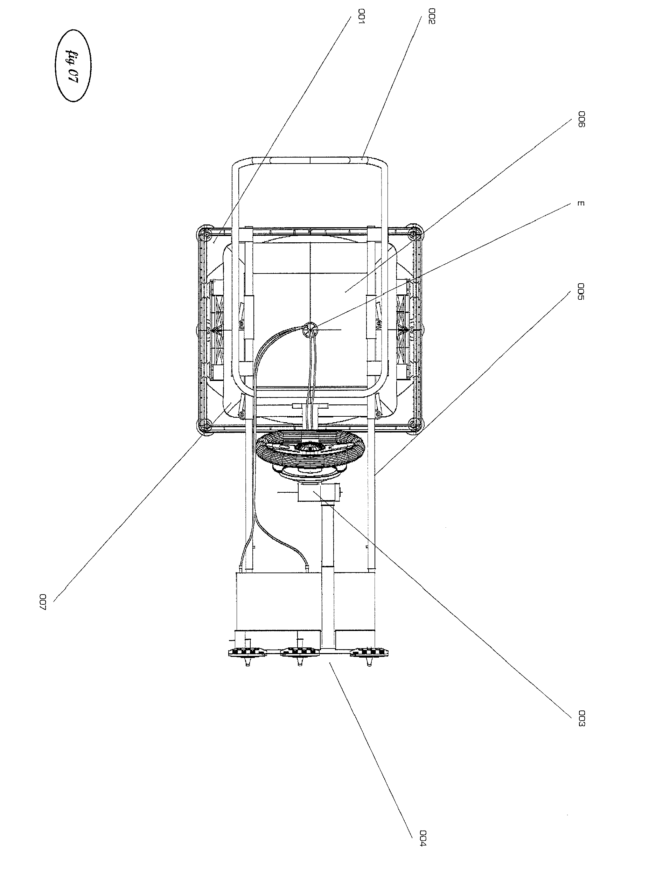

Figures 3 to 7 show an embodiment of the present invention from different perspectives. The device (1) can be placed on a floor. In the figures, the base frame of the device comprises little supports at the bottom whose height may be easily adjusted in order for the base frame to be stable and essentially horizontal. The seat (2) is mounted onto the frames using a seat mounting system comprising a first seat frame (6) rigidly attached to the second subframe below and comprising two rail tracks in the longitudinal direction. A second seat frame (5) rigidly attached to the seat comprises two rails which can slide in the longitudinal direction over these rail tracks. The rotation center point (E) is located above the seat at a distance of about 28cm from the seat. The figures further show a roll input device in the form of a steering wheel (3) and a pitch input device in the form of a pedal system (4). The figures also show the wires connecting the steering wheel and the pedal system with the roll and pitch controlling systems respectively. These wires run via a central opening in the seat, in this case through a central pillar which connects the seat with the second subframe. Part of a cover (7) protecting the user from the mechanical parts of the device is also shown.

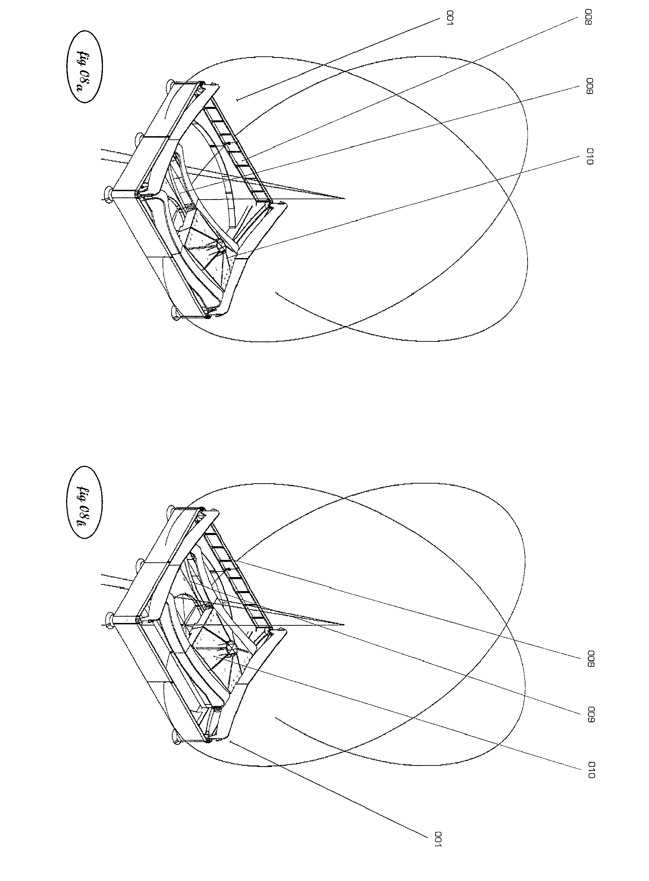

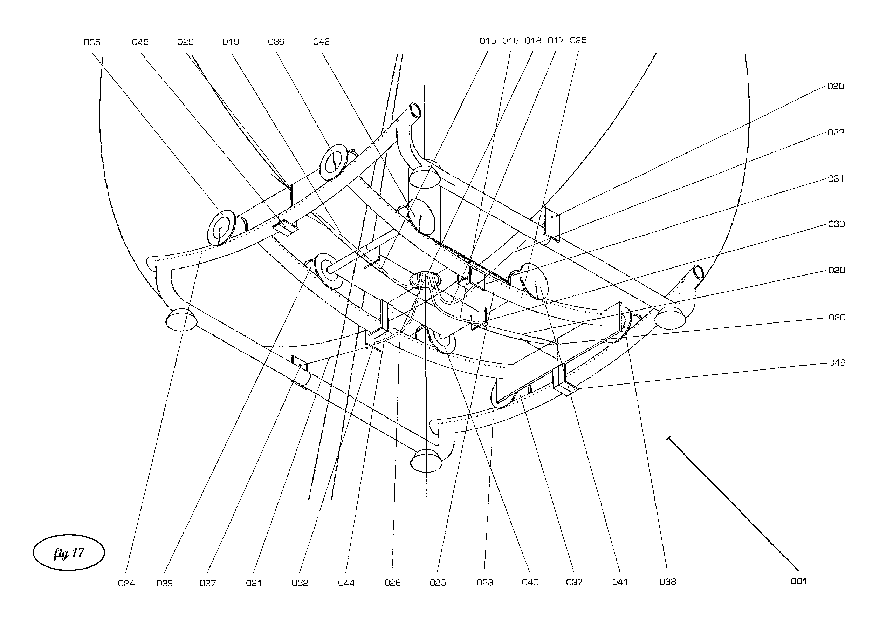

Figures 8 to 21 show embodiments of the present invention where each of the two guiding systems comprise a pair of bars and two pairs of wheels, whereby the bars have a circular transverse cross section and the wheels have a inwards bulging peripheral profile.

In figure 8a, the device (1) is shown with its base frame (8), its first subframe (9) and its second subframe (10). Figure 8b shows the same, but with the first subframe in a different position as in fig. 8a.

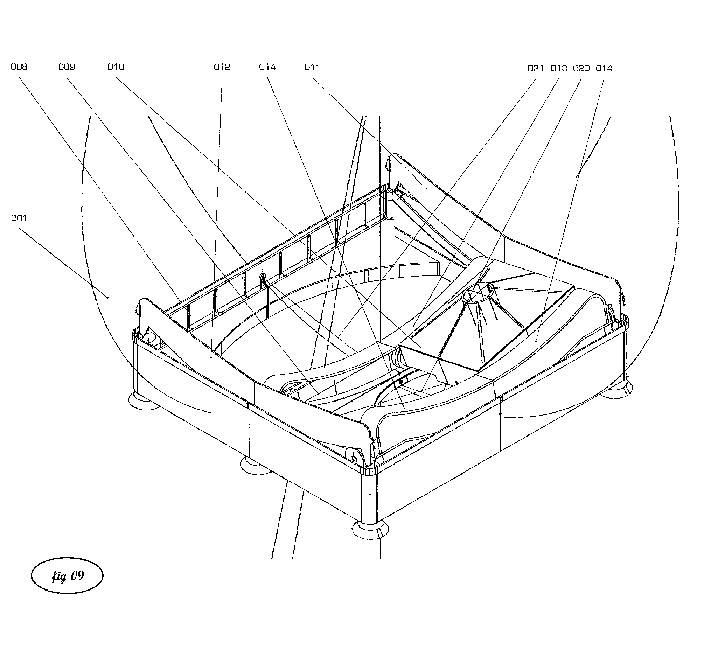

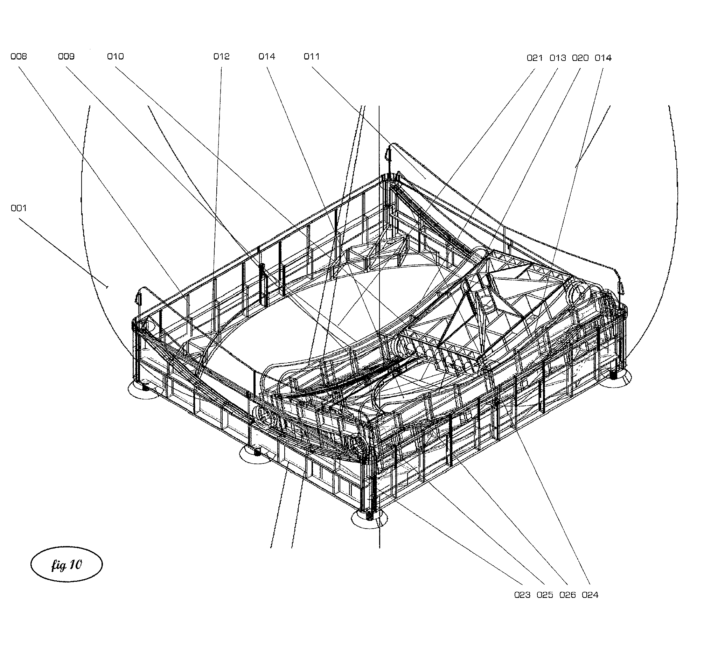

Figures 9 and 10 show this embodiment of the invention in more detail. The device (1) comprises a base frame (8), a first subframe (9) mounted onto the base frame, and a second subframe (10) mounted onto the first subframe. The first guiding system comprises a first capturing rail (11) on the left side of the device and a second capturing rail (12) on the right side of the device. The second guiding system comprises a first capturing rail (13) on the back side of the device and a second capturing rail (14) on the front side of the device. The capturing rails are counter-rails which ensure that the subframes remain stable and thus do not tip over when they approach the extremal positions of their trajectories. Furthermore, if the device would be lifted by the seat, the capturing rails will ensure that the whole device is lifted rather than only the top subframe. Also shown are inner Bowden cables of the control systems, more in particular the cables connected to the back end (21) and to the right end (20). Pulling this cables into their outer tubes results in a backward and rightway movement respectively. Figure 10 further shows the rails of the first guiding system on the left side (24) and on the right side (23) of the device, and also the rails of the second guiding system on the back side (25) and on the front side (26) of the device.

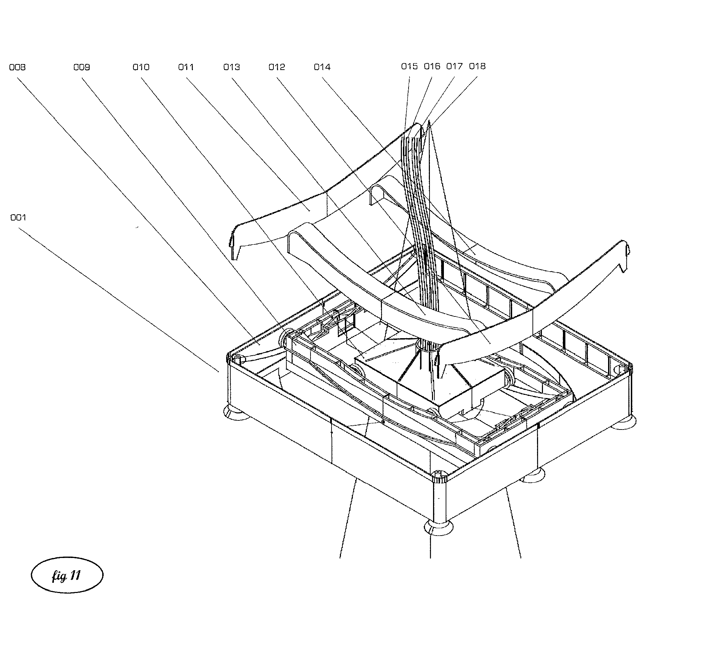

Figure 11 shows the device (1) with its frames (8, 9, 10), with counter-rails or capturing rails of the two guiding systems (11, 12, 13, 14) lifted from their position for clarity. Figure 11 further shows four Bowden cables for controlling the pitch and roll movements of the subframes. One cable (15) is used to control the clockwise movement, one cable (16) is used to control the counterclockwise movement, one cable (17) is used to control the forward somersault or backward movement and one cable (18) is used to control the backward somersault or forward movement.

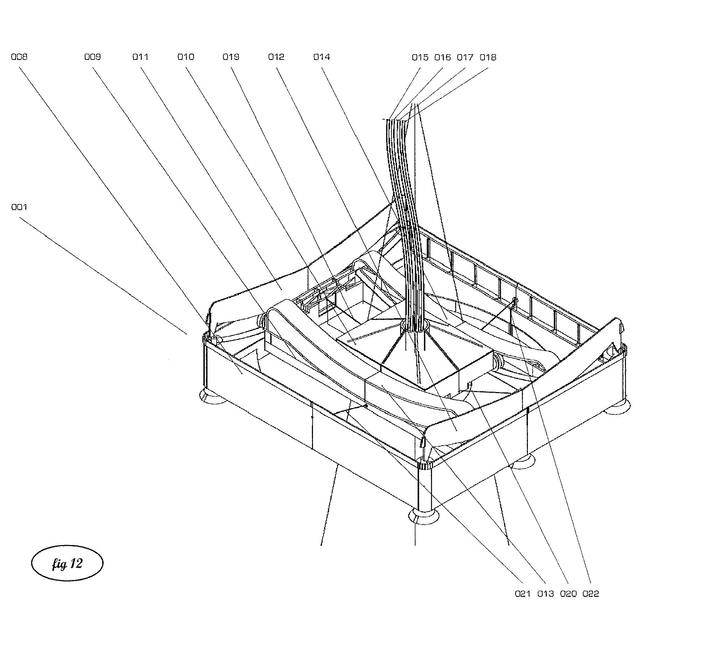

Figure 12 shows the same as fig. 11, but with the counter-rails in their position. Furthermore, the inner cables of the Bowden cables are also shown. Note that when the subframes are moving to the left when inner cable (19) is pulled, this results in a clockwise movement of the load, and when the subframes move to the right when inner cable (20) is pulled, this results in a counterclockwise movement of the load. Similarly, when the subframes are moved to the back when inner cable (21) is pulled, this results in a forward somersault movement of the load and when the subframes are moved to the front when inner cable (22) is pulled, this results in a backward somersault movement of the load.

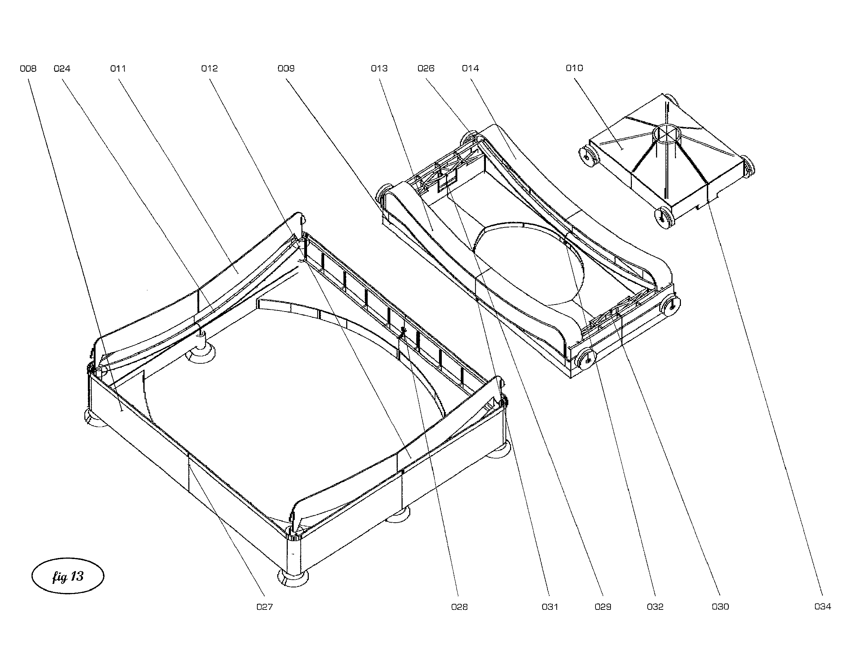

Figure 13 shows the device (1) whereby the base frame (8), the first subframe (9) and the second subframe (10) are pulled apart. The left rail (24) and the counter-rails (11) and (12) of the first guiding system are clearly visible. Also shown on the base frame are the attachment points for the Bowden inner cables of the first control system at the front (28) and at the back (27) of the base frame (8). The front rail (26) and the counter-rails (13) and (14) of the second guiding system are indicated on the first subframe (9). Also shown on the first subframe are the attachment points for the Bowden inner cables of the second control system at the left (29) and at the right (30) of the base frame (9). The outer tubes of the Bowden cables of the first control system can be attached at the indicated points (31) and (32) for controlling the backwards and forwards movement of the first subframe respectively. Figure 13 also shows the second subframe (10) with an attachment point (34) for the outer tube of the Bowden cable of the second control system which controls the movement of the second subframe to the right.

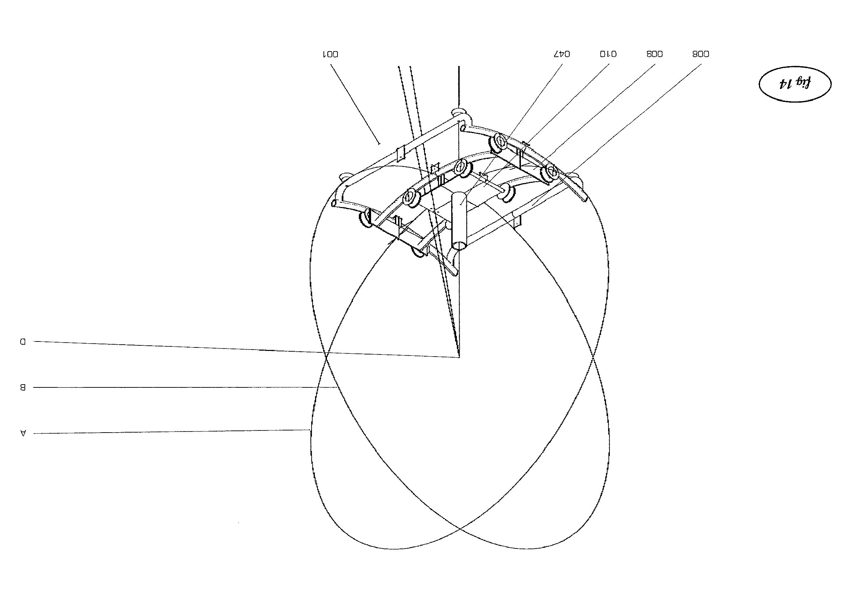

Figure 14 shows an embodiment of the present invention in relation to the axes of rotation. The first axis is the pitch axis (B) around which the first subframe (9) can rotate. The second axis is the roll axis (A) around which the second subframe can rotate. Also shown is the expected position of the center-of-mass of the load which, here, corresponds to the rotation center point. Also shown is a hollow central pillar (47) which can be used to attach the seat to the second subframe and for guiding the cables or wires of the control systems from the frames to the input devices.

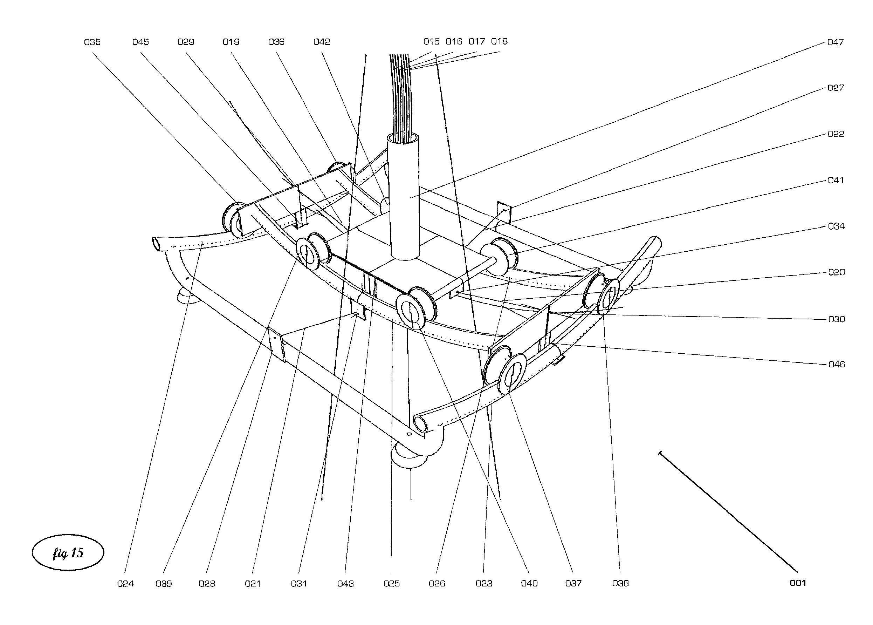

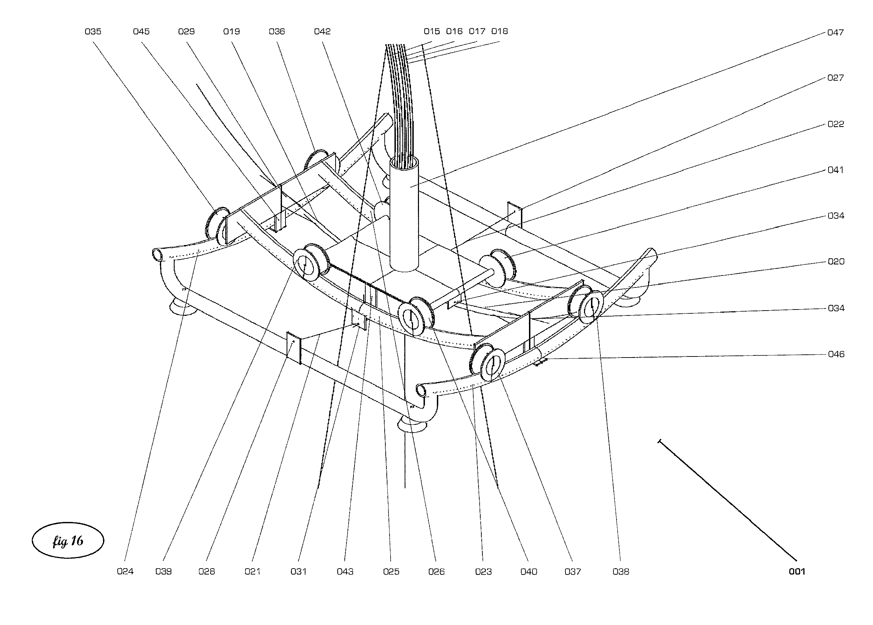

Figures 15, 16 and 17 show an embodiment of the device (1) of the present invention from slightly different perspectives. The first guiding system comprises a pair of parallel rails (23, 24) connected to the base frame and two pairs of wheels (35, 36, 37, 38) rotatably attached to the first subframe. The second guiding system comprises a pair of parallel rails (25, 26) connected to the first subframe and two pairs of wheels (39, 40, 41, 42) rotatably attached to the second subframe. The controlling systems comprise two pairs of Bowden cables (15, 16, 17, 18) which are guided through a central pillar (47) towards the input devices such as a steering wheel and a pedal system. The inner Bowden cables (19), (20), (21) and (22) control the movement of the first and/or second subframe to the left, right, back and front respectively, when they are being pulled. Inner Bowden cables (19) and (20) of the second control system are attached to the left (29) and right (30) attachment points on the first subframe respectively. Correspondingly, outer tubes of the Bowden cables (15) and (16) of the second control system are attached to the left (33, not shown) and the right (34) attachment points on the second subframe respectively. Inner Bowden cables (21) and (22) are attached to the back (28) and the front (27) attachment points on the base frame respectively. Correspondingly, outer tubes of the Bowden cables (17) and (18) of the first control system are attached to the back (31) and the front (32) attachment points on the first subframe respectively. In the embodiment shown in figures 15 and 16 (and also 17), the subframes are restrained from tipping over by capture hooks (43), (44), (45) and (46) at the back and front of the second subframe, and at left and right of the first subframe respectively. These components hook a subframe onto its supporting (sub)frame such that it does not tip over. As such, these hooks fulfill the same function as the counter-rails of a previous embodiment.

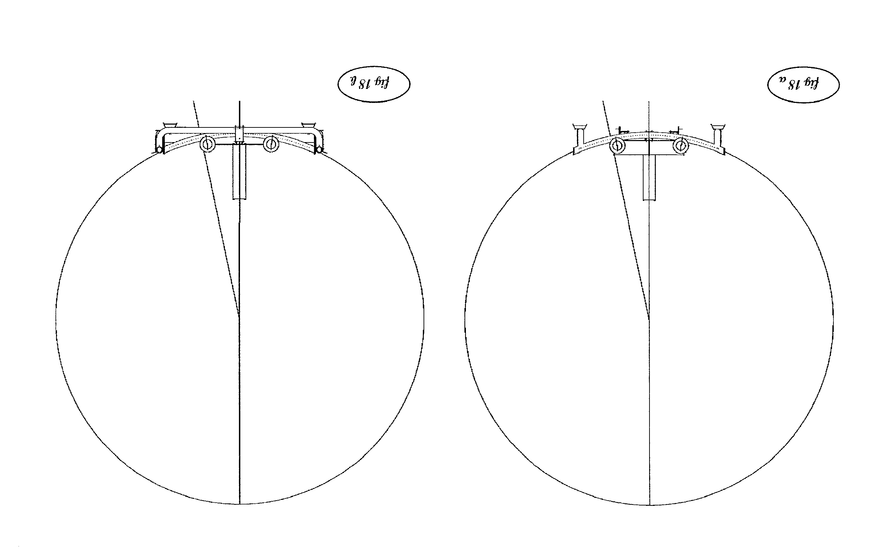

Figures 18a and 18b show the circular trajectory followed by the first and second subframe respectively.

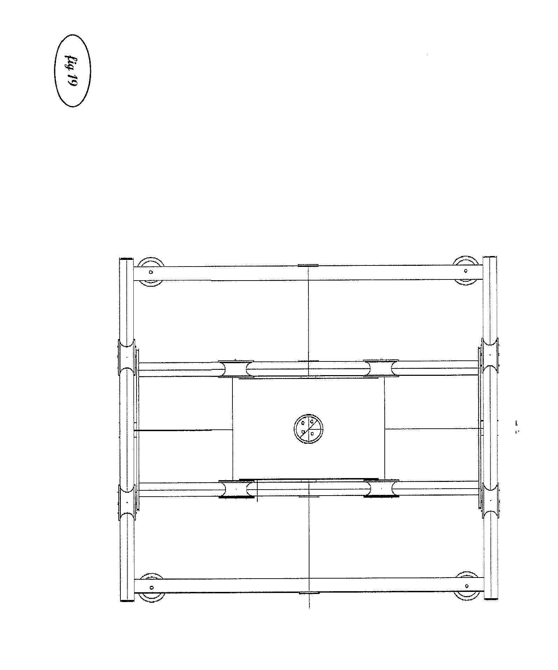

Figure 19 shows a top view of an embodiment of the device.

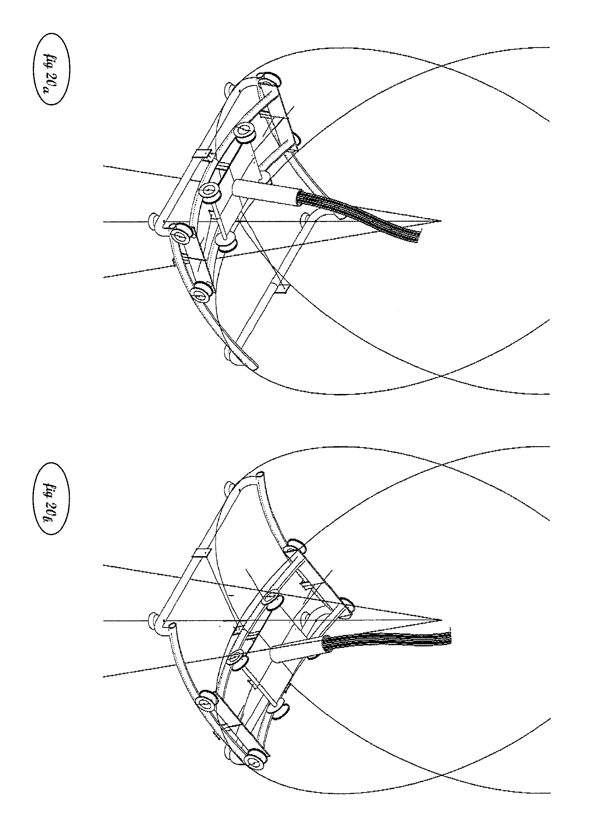

Figures 20a and 20b show an embodiment of the device in two different positions, which illustrate the pitch movement or pitch rotation of the first subframe and all the components attached to it.

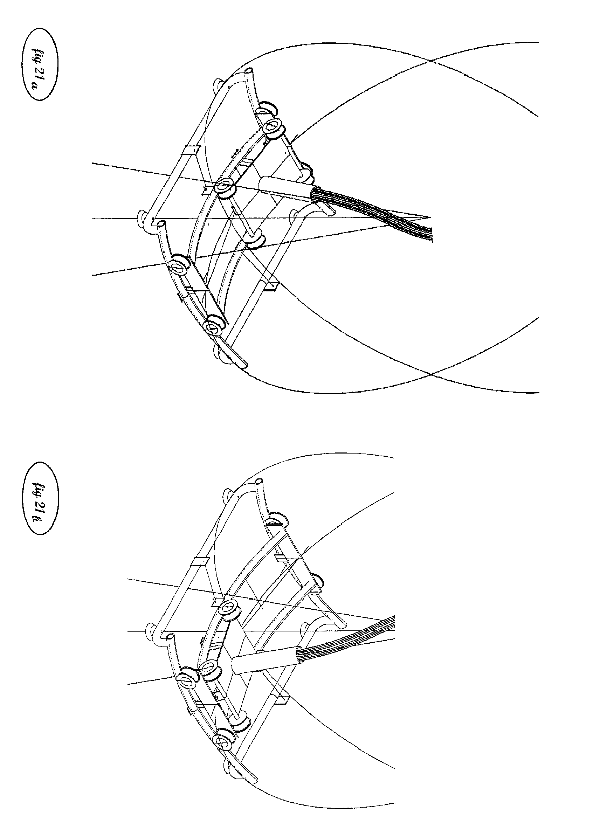

Figures 21a and 21b show an embodiment of the device in two different positions, which illustrate the roll movement or roll rotation of the second subframe and all the components attached to it.

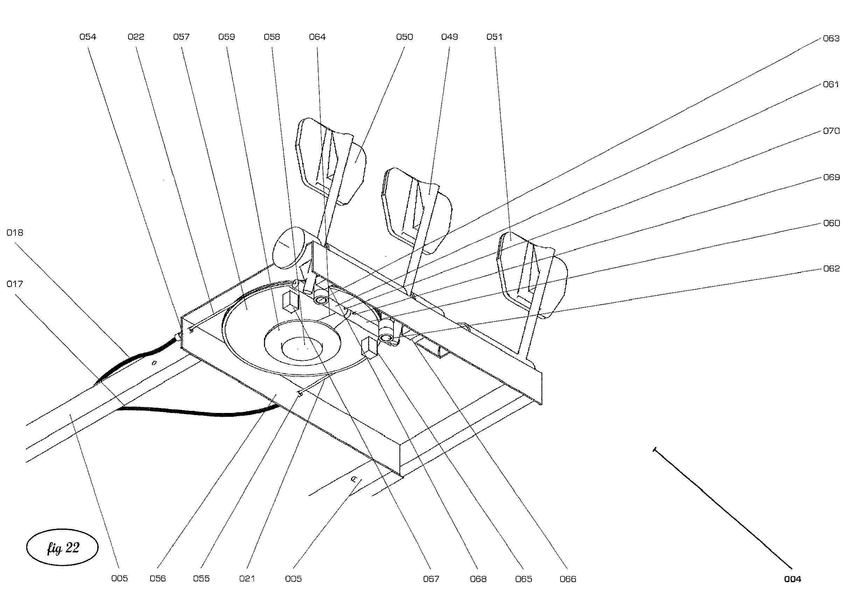

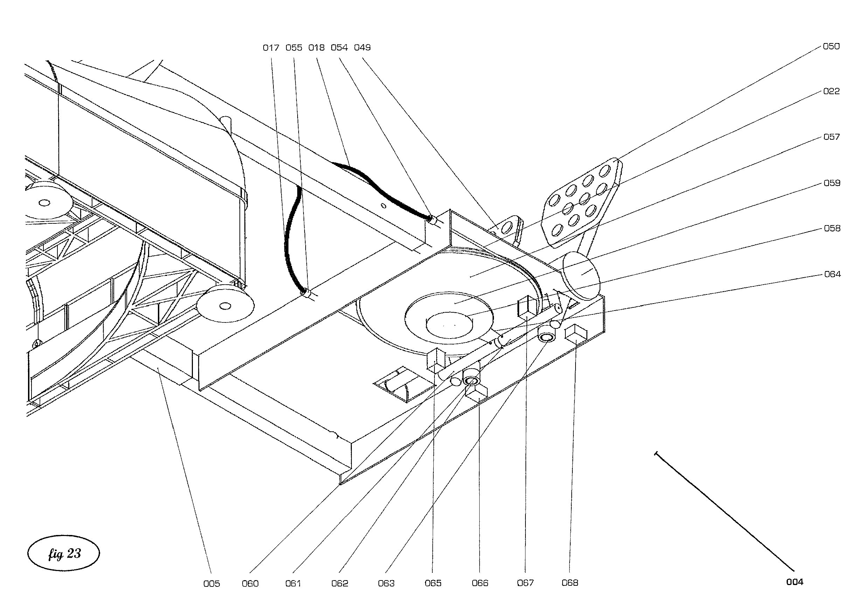

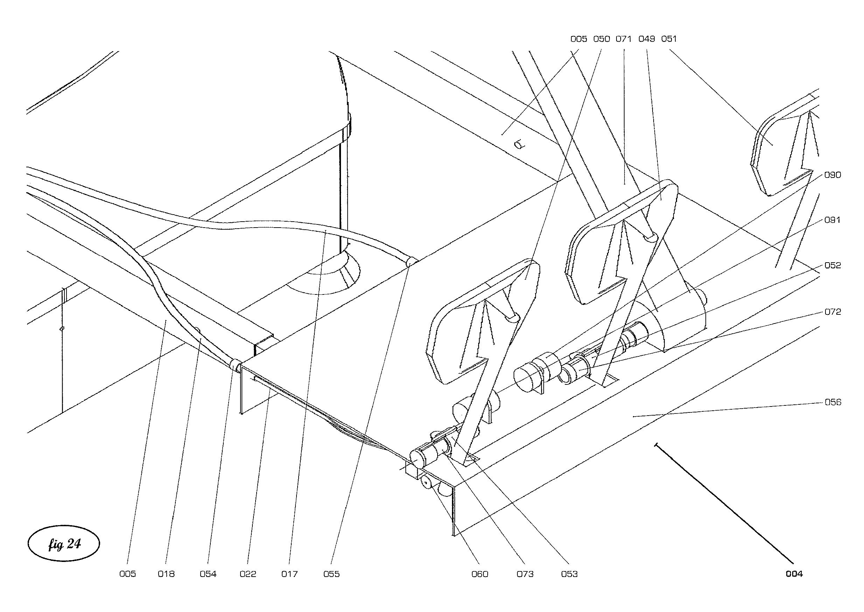

Figures 22, 23 and 24 show an embodiment of the present invention which comprises a pedal system (4) for controlling the pitch movement. The pedal system is attached to the seat e.g. via a set of rails which can slide into and out of the rails of the second seat frame (5) and can be fixed into a position suitable for the user. The pedal system is shown comprising three pedal levers: a brake pedal lever (49) for controlling the backwards movement of the subframes and thus the forward somersault movement of the load, a gas pedal lever (50) for controlling the forwards movement of the subframes and thus the backward somersault movement of the load, and a dummy clutch pedal (51) which in this case does not control anything, but can be used for support. The brake pedal lever is rotatably mounted on a brake pedal lever pivot (52). Likewise, the gas pedal lever is rotatably mounted on a gas pedal lever pivot (53). Pushing in the gas pedal lever (50) will result in the rotation of the 2^{nd} gas lever (61) around a 2^{nd} gas lever pivot (63). This will pull a lever cable (64) at its lever cable gas attachment point (70), the lever cable being attached to a small pedal disc (58). This pull thus results in a moment of force applied to the small pedal disc, which on its turn transmits this moment of force to a large pedal disc (57) with a pre-determined transmission coefficient. A cable cover disc (59) is present to cover and possibly guide the lever cable (64). The Bowden cable (18) controlling the forward movement of the subframes is attached with the proximal end of its outer tube (54) to to the pedal mount box 56), which is a fixed part of the pedal system. The proximal end of the inner Bowden cable (22) is attached to the large pedal disc (57). Therefore, pressing in the gas pedal lever (50) results in pulling the inner Bowden cable (22), therefore moving the first subframe to the front, thereby pitching the load backwards and thus simulating a longitudinal acceleration on the load. A similar mechanism is at work for the brake pedal lever (49). When this lever is pushed in, a 2^{nd} brake lever (60) is rotated around a 2^{nd} brake lever pivot (62). This 2^{nd} brake lever (60) then applies a pull on the lever cable (64) at its lever cable brake attachment point (69), thereby rotating the small pedal disc (58) in the opposite direction as for the gas pedal lever. The Bowden cable (17) controlling the backward movement of the subframes is attached with the proximal end of its outer tube (55) to the pedal mount box (56). The proximal end of the inner Bowden cable (21) is attached to the large pedal disc (57). Therefore, pressing in the brake pedal lever (50) results in pulling the inner Bowden cable (21), therefore moving the first subframe to the back, thereby pitching the load forwards and thus simulating a longitudinal deceleration on the load. To limit the maximal angle over which the gas and brake pedal lever can be turned, two rubber stops (66, 68) are attached to the inner side of the pedal mount box (56) and two rubber stops (65, 67) are attached to the bottom (not shown in the figure for clarity) of the pedal mount box (56), which is a fixed part of the pedal system. In figure 24, a pillar for supporting the steering wheel (71) is attached to the pedal mount box between the clutch and brake pedals. The position of attachment is specifically chosen for preventing the user to push the brake and gas pedals at the same time. In order for the pedals to return to their upright position when they are not being pushed, a brake pedal return spring (72) and a gas pedal return spring (73) are mounted to the brake and pedal lever respectively. The pedal system (4) also comprises a brake pedal sensor (90) and a gas pedal sensor (90) which are capable of measuring the position of the brake and gas pedal levers respectively, e.g. electromagnetically, or via the tension on the pedal return springs, and which are capable of sending this position e.g. to a control unit or a console as input for a game.

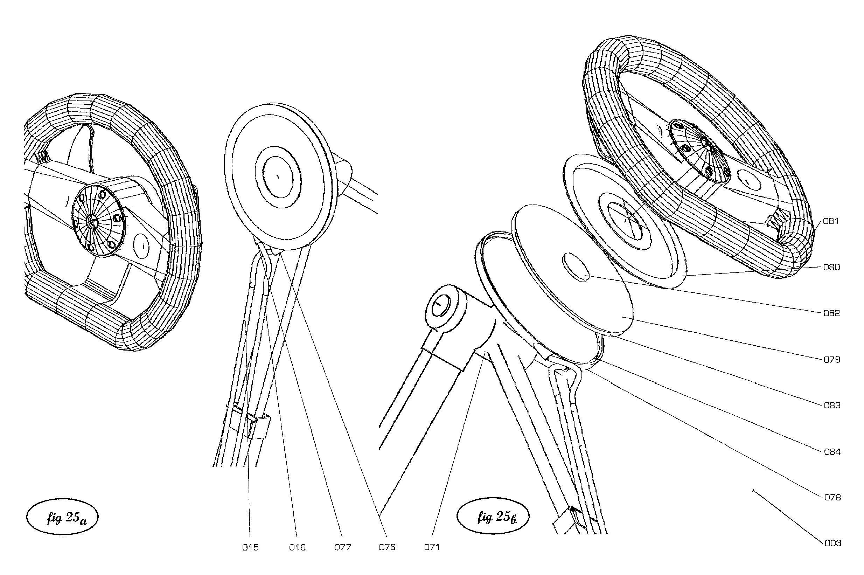

Figures 25a and 25b show an embodiment of the present invention which comprises a steering wheel system (3) for controlling the roll movement. The Bowden cable for controlling the movement of the second subframe to the left (15) is attached with the proximal end of its outer tube in an attachment point (76) to the static steering wheel's protective cover (78). Likewise, the Bowden cable for controlling the movement of the second subframe to the right (16) is attached with the proximal end of its outer tube in an attachment point (77) to the static steering wheel's protective cover (78). This protective cover (78) is mounted on a steering pillar (71) which is attached to the seat of the device. The proximal ends of the inner Bowden cables (19, 20) are attached to a steering disc (79) which is rotatably mounted on the protective cover (78) by steering wheel fixation means (82). The steering disc (79) has an inwards bulging peripheral profile or a peripheral gutter (83) for guiding the steering cable (84). The steering cable may comprise the proximal ends of the Bowden cables which may be attached to each other and to the steering disc (79). The steering disc (79) is covered by a steering protective lid (80) onto which a steering wheel (81) is mounted. The steering wheel system may further comprise sensors for sensing the position of the steering wheel and which are capable of sending this position e.g. to a control unit or a console as input for a game.

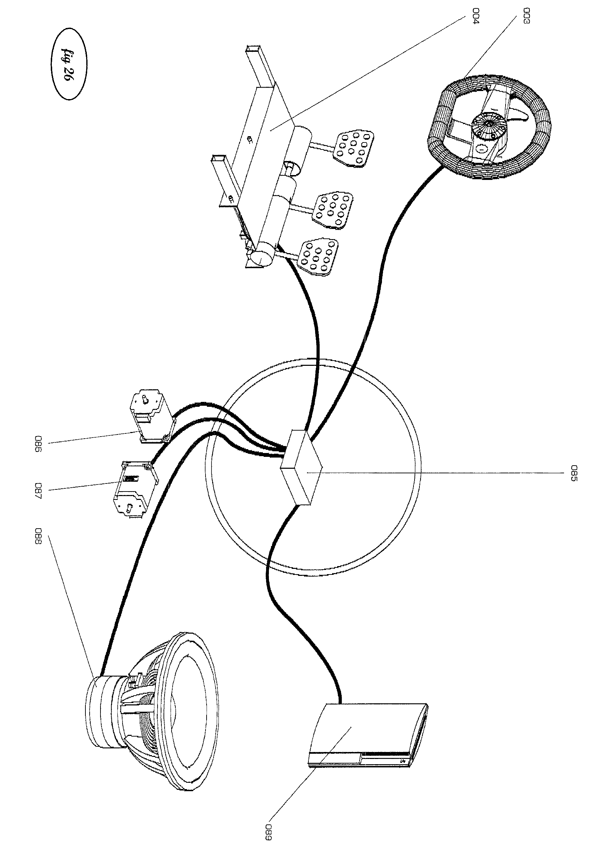

Figure 26 displays the connection of a console (89) to the peripherals of an acceleration simulating device according to an embodiment of the present invention. A console (89), such as a Playstation, Xbox, Wii, iPad, iPhone, PSP, Nintendo DS, PC, laptop, netbook, TV, display screen, DVD-player, Blue-ray player, CD-player, 2D or 3D video display glasses, head-mounted displays, etc., is connected via a wire to a control unit (85) which can be a signal splitter. Alternatively, this connection can be wireless. The control unit receives the position of the roll input device such as a steering wheel system (3) and of the pitch input device such as a pedal system (4) as input, and sends the appropriate signals to the console as input. The control unit further sends out the appropriate signals, which depend on the positions of the roll and pitch input devices and possibly also on the gaming software which is playing on the console, to the control systems of the device which in this case are electromotors (86) and (87) and a subwoofer (88) which can be placed e.g. under the seat for simulating rumble.

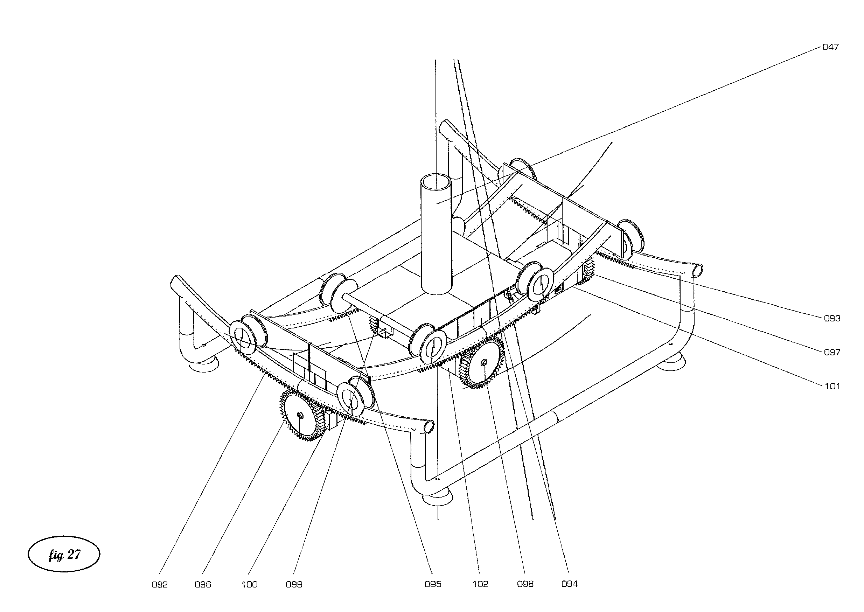

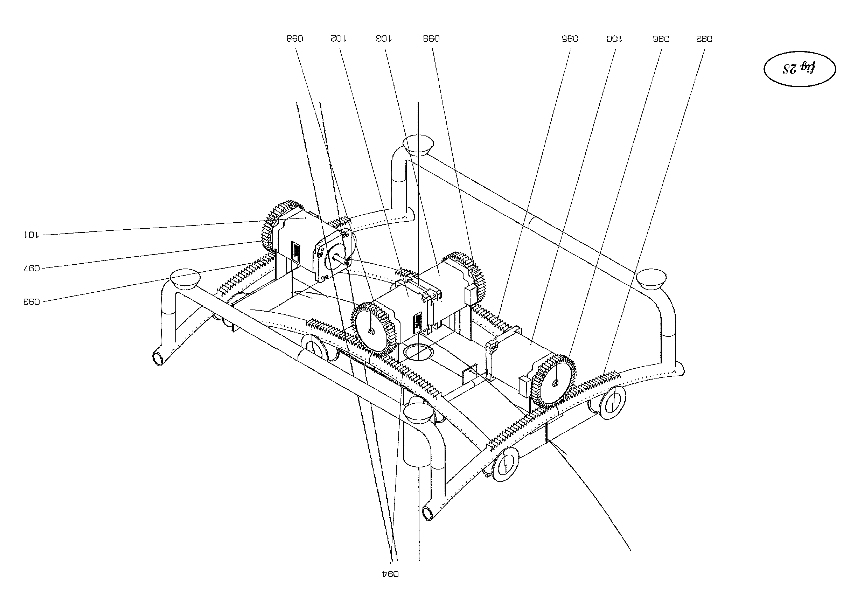

Figures 27 and 28 show an embodiment of the present invention where the control systems comprise electromotors. The first control system comprises two electromotors (100) and (101) which control the front-to-back movement of the first subframe and which are attached to the first subframe. Gears (96) and (97) are attached to the axes of the electromotors (100) and (101). The gears (96) and (97) grip into a set of teeth (92) and (93) attached at the bottom of the rails (23) and (24) of the first guiding system. The second control system comprises two electromotors (102) and (103) which control the clockwise-counterclockwise movement of the second subframe and which are attached to the second subframe. Gears (98) and (99) are attached to the axes of the electromotors (102) and (103). The gears (98) and (99) grip into a set of teeth (94) and (95) attached at the bottom of the rails (26) and (25) of the second guiding system.

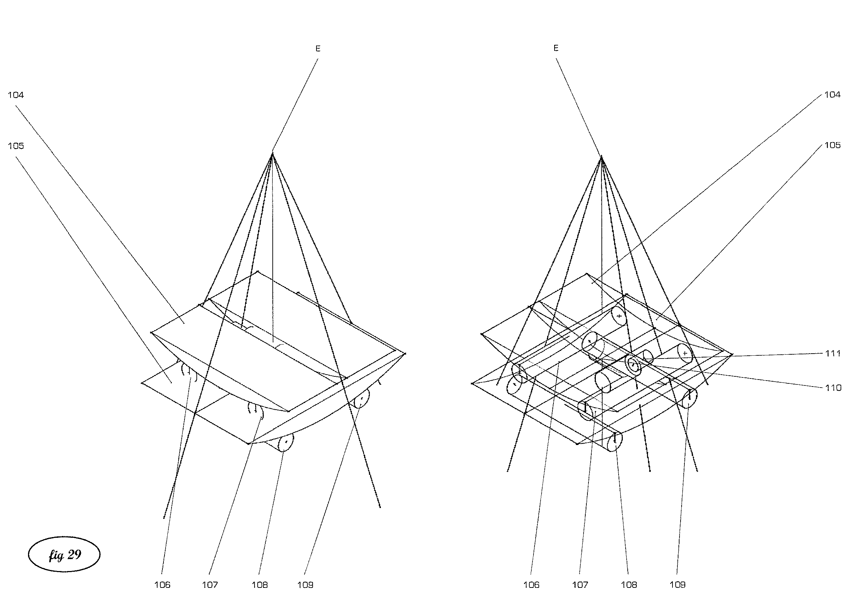

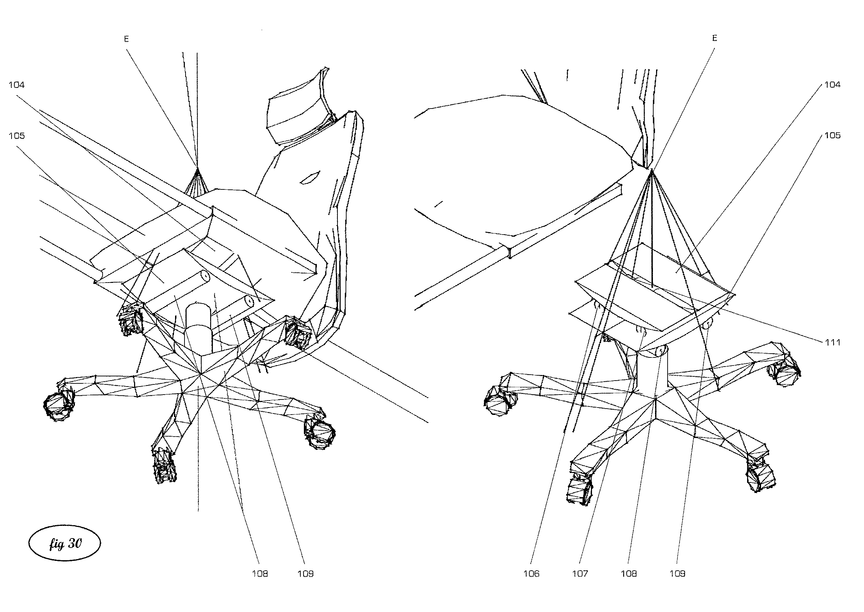

Figures 29 and 30 show embodiments of the present invention in which the guiding systems each comprise a pair of cylinders rotatably mounted on the supporting frame and a curved surface attached to the supported frame. The cylindrically curved surfaces attached at the bottom of the first subframe (105) may roll over two cylinders (108) and (109) rotatably attached to the base frame. Likewise, the cylindrically curved surfaces attached at the bottom of the second subframe (104) may roll over two cylinders (106) and (107), rotatably attached to the first subframe. The subframes thus can follow circular trajectories around a rotation center point (E). The embodiment shown in figs. 29 and 30 also comprises control systems comprising a motor (110) controlling the pitch movement and a motor (111) controlling the roll movement. The motors can be electromotors that apply moments of force on the cylinders which may be coated with a rubber layer and through friction apply a force on the subframe, thereby moving them along their trajectories. To increase the friction, the curved surfaces at the bottom of the subframes may also be coated with a rubber layer. As seen in fig. 30, this embodiment may also comprise a seat, such as an office chair seat mounted onto the second subframe. Furthermore, in this embodiment, the base frame may comprise a set of wheels at the bottom for easily repositioning the device and may also comprise a set of telescopic tubes for regulating the height of the subframes. The base frame may be attached rotatably to a foot support such as shown in the figure, e.g. via a set of telescopic tubes. This rotatable attachment allows the base frame to rotate around an upstanding axis, hereby allowing yaw movements.

It is supposed that the present invention is not restricted to any form of realization described previously and that some modifications can be added to the presented example of fabrication without reappraisal of the appended claims. For example, the present invention has been described referring to the first axis as being the pitch axis and the second axis as being the roll axis, but it is clear that the invention can be applied for instance to embodiments where the first axis is the roll axis and the second axis is the pitch axis.

## Claims

1. Acceleration simulating device for controllably rotating a load, comprising:
● a base frame for supporting a first and second subframe;
● said first subframe which is mounted onto the base frame with a first guiding system capable of guiding the first subframe on a first curved trajectory around a first, lying axis which is located above the second subframe, said first trajectory being limited to an arc of a circle subtending an angle which is smaller than 90°;
● said second subframe which is mounted onto the first subframe with a second guiding system capable of guiding the second subframe on a second curved trajectory around a second axis which lies essentially perpendicular to the first axis and which essentially cuts the first axis in a rotation center point, said second trajectory being limited to an arc of a circle subtending an angle which is smaller than 90°;
● a seat which is mounted onto the second subframe below the rotation center point and at a distance between 15cm and 50cm from the rotation center point.

2. Acceleration simulating device for controllably rotating a load according to claim 1, whereby the seat is located at a distance of 28cm from the rotation center point.

3. Acceleration simulating device for controllably rotating a load according to any of the claims 1 or 2, whereby the first trajectory is limited to an arc of a circle subtending an angle smaller than 40° and at least 10° and whereby the second trajectory is limited to an arc of a circle subtending an angle smaller than 40° and at least 10°.

4. Acceleration simulating device for controllably rotating a load according to any of the claims 1 to 3, whereby the first axis is a pitch axis which remains fixed with respect to the base frame and the second axis is a roll axis which remains fixed with respect to the second subframe.

5. Acceleration simulating device for controllably rotating a load according to any of the claims 1 to 3, whereby the first axis is a roll axis which remains fixed with respect to the base frame and the second axis is a pitch axis which remains fixed with respect to the second subframe.

6. Acceleration simulating device for controllably rotating a load according to any of the claims 1 to 5, whereby the first guiding system comprises:
● one or more, preferably two, curved bars or rails which are rigidly mounted on the base frame, said bars or rails following the path of the first trajectory;
● two or more wheels rotatably attached to the first subframe such that the wheels can roll over said bars or rails, thereby guiding the first subframe along the first trajectory;
and whereby the second guiding system comprises:
● one or more, preferably two, curved bars or rails which are rigidly mounted on the first subframe, said bars or rails following the path of the second trajectory;
● two or more wheels rotatably attached to the second subframe such that the wheels can roll over said bars or rails, thereby guiding the second subframe along the second trajectory.

7. Acceleration simulating device for controllably rotating a load according to any of the claims 1 to 5, whereby the first guiding system comprises:
● at least two cylinders rotatably attached to the base frame;
● at least one curved surface rigidly attached to the first subframe, said surface following the path of the first trajectory;
whereby said curved surface can roll over said cylinders, thereby guiding the first subframe along the first trajectory,
and whereby the second guiding system comprises:
● at least two cylinders rotatably attached to the first subframe;
● at least one curved surface rigidly attached to the second subframe, said surface following the path of the second trajectory;
whereby said curved surface can roll over said cylinders, thereby guiding the second subframe along the second trajectory.

8. Acceleration simulating device for controllably rotating a load according to any of the claims 1 to 7, whereby the first guiding system comprises one or more restraining elements, such as counter-rails or counter-bars, attached to the base frame or attached to the first subframe for preventing the first subframe from tipping over, and whereby the second guiding system comprises one or more restraining elements, such as counter-rails or counter-bars, attached to the first subframe or attached to the second subframe for preventing the second subframe from tipping over.

9. Acceleration simulating device for controllably rotating a load according to any of the claims 1 to 8, whereby the seat is attached to the second subframe with a seat mounting system for allowing the seat to be moved in the longitudinal direction, said seat mounting system comprising:
● a first seat frame rigidly attached to the second subframe and comprising one or more rails in the longitudinal direction;
● a second seat frame rigidly attached to the seat comprising one or more rails which fit in or around the rails of the first seat frame and which can slide over the rails of the first seat frame;
● a rail locking device such as a clamp or a pin, for locking the second seat frame in a fixed position with respect to the first seat frame.

10. Acceleration simulating device for controllably rotating a load according to any of the claims 1 to 9, comprising a first control system for controlling the position of the first subframe with respect to the base frame, and a second control system for controlling the position of the second subframe with respect to the first subframe.

11. Acceleration simulating device for controllably rotating a load according to claim 10, whereby the first control system comprises one or more electromotors which are attached to the first subframe, said first control system further comprising first transmission means for transmitting the rotational movement of the electromotors' axes to the movement of the first subframe along the first trajectory, said first transmission means preferably comprising a set of teeth rigidly mounted on the base frame along the first trajectory, preferably on the first guiding system and one or more gears attached to the axes of the electromotors which grip into said teeth, and whereby the second control system comprises one or more electromotors which are attached to the second subframe, said second control system further comprising second transmission means for transmitting the rotational movement of the electromotors' axes to the movement of the second subframe along the second trajectory, said second transmission means preferably comprising a set of teeth rigidly mounted on the first subframe along the second trajectory, preferably on the second guiding system and one or more gears attached to the axes of the electromotors which grip into said teeth.

12. Acceleration simulating device for controllably rotating a load according to claim 11, whereby the first axis is the pitch axis and the second axis is the roll axis, said device further comprising:
● a control unit connected to the electromotors of the first and second control systems which is capable of controlling the power and rotation orientation of said electromotors;
● a roll input system such as a steering wheel system attached to the seat and connected to the control unit for controlling the second control system;
● a pitch input system such as a pedal system attached to the seat and comprising at least two pedals connected to the control unit for controlling the first control system, said pedal system preferably comprising pedal returning actuators for forcing the pedals back to a pre-determined rest position.

13. Acceleration simulating device for controllably rotating a load according to claim 10, whereby the first control system comprises:
● a first Bowden cable comprising a first inner cable and a first outer tube, whereby a distal end of the first inner cable is attached to the base frame at a first extremal position of the first trajectory and whereby a distal end of the first outer tube is attached to the first subframe at the side of the first extremal position of the first trajectory, thereby controlling the movement of the first subframe along the first trajectory in the direction of its first extremal position by pulling a proximal end of the first inner cable out from a proximal end of the first outer tube;
● a second Bowden cable comprising a second inner cable and a second outer tube, whereby a distal end of the second inner cable is attached to the base frame at a second extremal position of the first trajectory and whereby a distal end of the second outer tube is attached to the first subframe at the side of the second extremal position of the first trajectory, thereby controlling the movement of the first subframe along the first trajectory in the direction of its second extremal position by pulling a proximal end of the second inner cable out from a proximal end of the second outer tube;
and whereby the second control system comprises:
● a third Bowden cable comprising a third inner cable and a third outer tube, whereby a distal end of the third inner cable is attached to the first subframe at a first extremal position of the second trajectory and whereby a distal end of the third outer tube is attached to the second subframe at the side of the first extremal position of the second trajectory, thereby controlling the movement of the second subframe along the second trajectory in the direction of its first extremal position by pulling a proximal end of the third inner cable out from a proximal end of the third outer tube;
● a fourth Bowden cable comprising a fourth inner cable and a fourth outer tube, whereby a distal end of the fourth inner cable is attached to the first subframe at a second extremal position of the second trajectory and whereby a distal end of the fourth outer tube is attached to the second subframe at the side of the second extremal position of the second trajectory, thereby controlling the movement of the second subframe along the second trajectory in the direction of its second extremal position by pulling a proximal end of the fourth inner cable out from a proximal end of the fourth outer tube;
preferably whereby the first axis is the pitch axis, the first control system is a pitch control system, the second axis is the roll axis, and the second control system is a roll control system, said device comprising a steering wheel attached to the seat and connected to the proximal ends of the Bowden cables of the roll control system, said device comprising a pedal system attached to the seat and which comprises at least two pedals connected to the proximal ends of the Bowden cables of the pitch control system, said pedal system preferably comprising pedal returning actuators for forcing the pedals back to a pre-determined rest position.

14. A system comprising a base frame, a first subframe and a second subframe suitable to be used in an acceleration simulating device for controllably rotating a load according to any of the claims 1 to 13.

15. A system comprising an acceleration simulating device for controllably rotating a load according to any of the claims 1 to 13, and a console connected to the control unit of said device.
